Europäisches Patentamt

European Patent Office

Office européen des brevets

(11) Publication number : **0 488 578 A2**

# (12) EUROPEAN PATENT APPLICATION

(21) Application number : **91310689.4**

(22) Date of filing : **20.11.91**

(51) Int. Cl.⁵ : **G06F 15/72**

(30) Priority : **26.11.90 US 617705**

(43) Date of publication of application :
**03.06.92 Bulletin 92/23**

(84) Designated Contracting States :
**DE FR GB IT**

(71) Applicant : **CADAM INCORPORATED**
**1935 Buena Vista Street**
**Burbank, California 91504 (US)**

(72) Inventor : **Chen, Liangpin**
**414 N. Nicholson Avenue**
**Monterey Park, CA 91754 (US)**

(74) Representative : **Bailey, Geoffrey Alan**
**IBM United Kingdom Limited Intellectual**
**Property Department Hursley Park**
**Winchester Hampshire SO21 2JN (GB)**

(54) **Enhanced computer aided design shading.**

(57) Disclosed herein is a design system for designing, dynamically changing and displaying design drawings. The invention allows a user to select a solid object from a display as the current, active object. The user then selects a surface to present in the foreground. The system then modifies the display data structure to accentuate the foreground surface by modifying the illumination of individual pixels. This technique gives the effect of shading areas on the display to highlight important characteristics of the drawing.

FIG.1

EP 0 488 578 A2

The present invention generally relates to improvements in computer aided design (CAD) systems and more particularly to a technique for shading surfaces to enhance perception of the same.

In CAD applications, it is important to be able to transform two-dimensional representations of objects into solid representations. The automobile and aircraft industries were two of the first to exploit this function for mechanical assemblies. Examples of general CAD systems are disclosed in US Patents 4,962,472; 4,849,913; and 4,912,664.

US patent 4,849,913 discloses a method for the design and construction of composite parts by logically determining the geometric definitions for each ply contained in the composite part. This information can be used by subsequent analysis routines to determine the optimal method for manufacturing the part. Thus, the physical relationship of each of the parts and their correlating features are available for use by the system. However, the CAD system does not have any ability to dynamically alter the dimensions of a solid based on a change in distance between a plurality of faces.

A face is used to refer to an unbounded place. Unbounded refers to the fact that no limits are paced on the plane dimensions. A loop is a bounded area of a face. Boundary elements comprise the loop. For example, the four lines forming the edge of the plane are boundary elements. A Vertex is an endpoint of an edge. Vertices are calculated by finding the intersection of three (3) intersecting plane equations. A loop table contains information defining all the loops contained in the solid object.

In accordance with the present invention, there is now provided apparatus for performing a set of display operations to modify a three dimensional drawing on a graphic display, comprising:

(a) means for storing information defining a three dimensional drawing on the graphic display;

(b) means for generating a drawing on the graphic display based on the information;

(c) means for selecting a surface of the drawing;

(d) means for modifying the information and displaying the drawing with the selected surface appearing in the foreground of the display.

Thus, the present invention advatageously overcomes the limitation of the prior art to provide an accurate, realistic representation of a three dimensional drawing on a graphic display.

Viewing a second aspect of the present invention, there is now provided a method for performing a set of display operations to modify a three dimensional drawing on a graphic display, comprising the steps of:

(a) storing information defining a three dimensional drawing on the graphic display;

(b) generating a drawing on the graphic display based on the information;

(c) selecting a surface of the drawing;

(d) modifying the information and displaying the drawing with the selected surface appearing in the foreground of the display.

The present invention thus provides an improved apparatus for and method of designing, dynamically changing and displaying three dimensional shaded representations.

A preferred embodiment of the preset invention enhances the display of three dimensional surfaces by using an algorithm to build a color table for shading and allowing the user to invert the normal of a surface to render a realistic image. The color table contains two hundred color entries. The logic adds a non-linear intensity factor on top of a linear incremental function to generate a color table continuous intensity from low to high. The color table is regenerated every time the user changes the shading color. Based on the current values in the color table, the shaded surface is accentuated according to the viewing and light position. The user selects the incorrect surfaces and the system inverts the surface normal to the deleted surface and reshades the surface to accent the realistic view.

A preferred embodiment of the present invention will now be described with reference to the accompanying drawings in which:

Figure **1** is a block diagram of a computer in accordance with the present invention;

Figure **2** is a flow chart of the solid logic in accordance with the present invention;

Figure **3** is a flow chart of the solid logic for a tapered solid in accordance with the present invention;

Figure **4** is an illustration of the steps used to generate an extruded solid in accordance wit the present invention;

Figure **5** is an illustration of the steps used to generate an extruded solid in accordance with the present invention;

Figure **6** is an illustratior of the steps used to generate a tapered solid in accordance with the present invention;

Figure **7** is an illustration of a step used to generate a tapered solid in accordance with the present invention;

Figure **8** is an illustration of a set of steps used to generate a tapered solid in accordance wit the present invention;

Figure **9** is an illustration of a pair of two dimensional drawings in accordance with the present invention;

Figure **10** is an illustration of a solid model in accordance with the present invention;

Figure **11** is an illustration of the parameter function menu options in accordance with the present invention;

Figure **12** is an illustration of correlating parametric entities in accordance with the present invention;

Figure **13** is a flowchart describing the logic of defining relationships between the faces of a solid object in accordance with the subject invention;

Figure **14** is a flowchart describing the logic of the No Show function in accordance with the subject invention;

Figure **15** is a flowchart of the logic implemeting the defining a parent face in accordance with the subject invention;

Figure **16** is a flowchart of the logic implementing the defining an offset face in accordance with the subject invention;

Figure **17** is a flowchart of the logic implementing the Change Parameter function in accordance with the subject invention;

Figure **18** is a flowchart depicting the logic of the shading surface normal in accordance with the subject invention;

Figure **19** is a flowchart depicting the logic of the rearranging surface data in accordance with the subject invention;

Figure **20** is an illustration of a reverse normal of a top surface in accordance with the subject invention;

Figure **21** is an illustration of a select side surface display in accordance with the subject invention;

Figure **22** is an illustration of a reverse normal of a side surface display in accordance with the subject invention;

Figure **23** is an illustration of a reverse normal of a front surface in accordance with the subject invention; and

Figure **24** is an illustration of defracted light from a display in accordance with the subject invention.

## DETAILED DESCRIPTION OF THE INVENTION

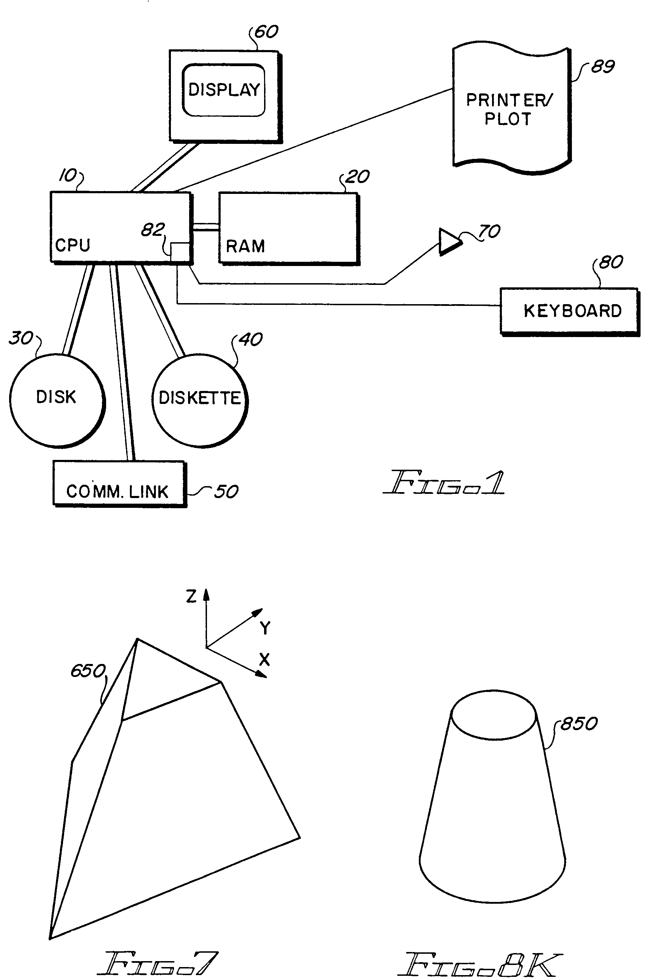

With reference to Figure **1**, the apparatus of the subject invention is a standard microprocessor such as that marketed by IBM under the product name of PS/2. The CPU **10** can bean 80386 or 80486 processor for example. The CPU **10** has Direct Memory Access (DMA) to the RAM **20**, Disk **30** and Diskette **40**. The CPU **10** can also transmit information via the Communication Link **50**.

The CPU **10** also communicates to an attached graphic display to display information in EGA, VGA or other higher resolution modes. A mouse **70** is an optional cursor pointing device that is used to supplement the arrow keys of the keyboard **80** for specifying precise pointings on the graphic display **60**. The keyboard is controlled by a keyboard adapter **82**, including buffer means, in the CPU **10**. Finally, a printer or plotter **89** can be attached to the CPU **10** to generate hardcopy of drawings.

The software used to awake the unique hardware features of this invention resides on the Disk **30** as do the drawings generated by a designer employing the invention. The software is also responsible for translating signals from the mouse/keyboard into appropriate system actions.

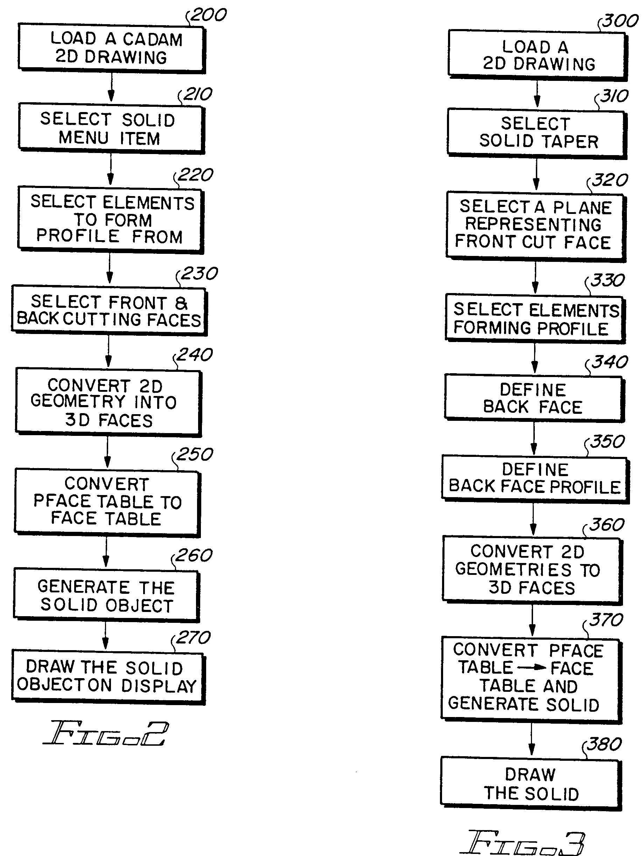

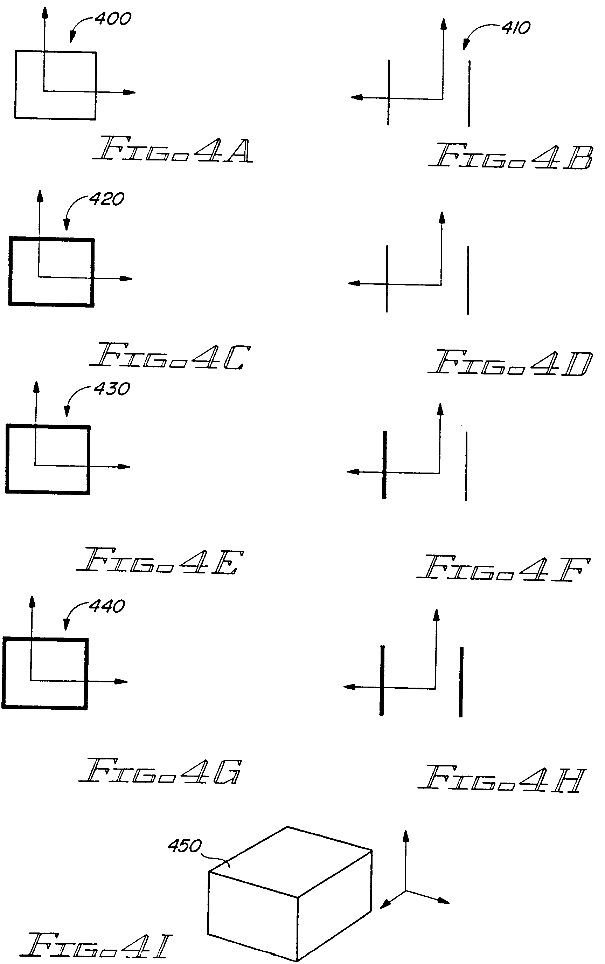

Figure **3** is a flowchart representing the logic in accordance with the invention. To generate a solid from a two dimensional drawing, the drawing is first loaded into the computer memory as shown in function block **200**. The drawing should contain multiple two dimensional views of an object. The user then selects the appropriate menu selection item as depicted in input block **210**. Then, the user selects elements to form a profile for the extrusion operation as depicted in input block **220**. The elements are lines and circles on the two dimensional views from which to generate the solid model. The pointers to the selected elements are stored in the data structure set forth below.

```
/* :
: PART V - The temporary records for keeping 2D elements
:
:............................................................
:
: option:   1- extrusion
:           2- taper
:           3- pyramid
:           4- rotation
:
: operation:
:
:           1- add
:          -1- subtract
:
: tip[2]       : a temporary cadam pointer to a point of a pyramid (not used)
: front, back : record front face and back face pointer (pointer to line)
: numbdry      : number of boundary segments in the bdry array
: bdry         : pointer to line and circle
: bdry1 bdry2 : only case 2 will use both index ( for taper only )
:               rest of the cases use bdry1
:
:............................................................
:
```

```
:  IDENTIFICATION:

:

:  AUTHOR ......... ALLEN  CHEN

:  DATE     ......... 10/15/89

:

:.................................................................

*/


struct    bdrytype
    {
    short    numbdry;
    short    bdry[maxbdry][2];
    };


struct    frametype
    {
    short    option;
    short    operator;
    short    front[2], back[2];
    short    tip[2];
    struct    bdrytype * bdry1;
    struct    bdrytype * bdry2;
    };


struct    film
    {
    short    numframe;
    struct    frametype * frame[maxframe];
    };
```

The geometric elements are selected in a clockwise or counter-clockwise sequence. When all of the necessary elements have been selected, then menu item END is selected to indicate completion. The data structure is used to store this information in a manageable fashion for further processing in accordance with the subject invention.

The user selects front and back cutting faces by selecting lines in the views other than the profile view as depicted in input block **230**. Next, the selected two dimensional elements are converted into three dimensional geometries as set forth in input block **240**. So, for example, a line becomes an unbounded plane, a circle becomes an unbounded cylinder, and a spline becomes a ruled face. The faces are stored in the PFace data structure set forth below.

A Face Table is a list of faces that form the boundary of a solid. The Face Table contains plane, cylinders and free form surface information. The Face Table serves as an interface between parametric design and the solid modeler. A PFace Table is a particular face table used for parametric design. It contains parameterized faces, a parameter table and a construction list for building a solid from the faces. A construction list contains a description of how each part of the solid is created and what faces are used to form the component.

```
/*=======================================

:

: PART I - CONSTANT DEFINITIONS FOR FACE TABLE

:.................................................

*/
#define   FSIZE     200
#define   MXSIZE    20
#define   maxbdry   100
#define   maxframe  100


#define   VARSIZE     100
/*=======================================


:

: PART II - THE FACE TABLE & PARAMETRIC TABLE

:

:.................................................

:
```

```
: PFace
:
: FaceType :
:
:      1- PlaneFace
:          subtype funcition
:          ------- ----------------------------------
:              0      original plane face
:              1      define offset plane, define  :
                              pointer to variable table
:                     which defines the
:                     offset value or formula
:              2      angled face
:             11      define chamfer plane
:
:
:      2- Circular Cylinder
:          subtype funcition
:          ------- ----------------------------------
:              0      original Cylinder, defines xy and R
:              1      define offset cylinder, define dR
:              2      define location
:             11      define round
:             12      define fillet
:
:      3- ConicFace
:      4- RuledFace
:      5- FreeFormFace
:      x- Arc      define cylinder number, A1, A2
:
:...............................................................
:
: Fcode - mark the usage of the face
:
:      bit 1: solid faces
```

```
:           2: construction faces
:           3: symmetric faces (shall be defined by its children)
:           4: datum face (??? unknown yet)
:
:    note : bit map 15,14,13......3,2,1
:
: .......................................................
:
: ModVar - count how many var were changed,
:          indicate the necessity of updating Var
:          table by bringing SmallTalk parser
:          not implemented in current version.
:
:......................................................
:
: struct PlaneSym
:
:    pair : stores the other symmetric face to the base
:    base : the base face
:
:......................................................
:
: struct PlaneChm
:
:   p1,p2,pw -  pointer to plane faces
:   vi,v2    -  pointer to variable table
:
:......................................................
:
: struct    Parameter
:
:   mode - 1: value
:           2: text
*/
#define ORGPLANE 0
```

```
#define OFFPLANE 1
#define SYMPLANE 2
#define CHMPLANE 11


struct PlaneOrg
    {
    double    A, B, C, D;
    };


struct PlaneOff
    {
    short     base;
    short     varid;
    };


struct PlaneSym
    {
    short     base, pair;
    short     varid;
    };


struct PlaneChm
    {
    short     p1, p2, pw;
    short     v1, v2;
    };


union   plane_ptr
    {
    struct    PlaneOrg    Porg;
    struct    PlaneSym    Psym;
    struct    PlaneOff    Poff;
    struct    PlaneChm    Pchm;
    };
```

```
struct PPlane
    {
    short    subtype;
    union    plane_ptr pclass;
    };


struct   PCylinder
    {
    double   R, X, Y, A1, A2, Z1, Z2;
    short    MatrixIndex;
    short    Udisp;
    struct   POINT *Vertics[2][13];
    };


struct   PCone
    {
    double   R1, R2, X, Y, A1, A2, Z1, Z2;
    short    MatrixIndex;
    short    Udisp;
    struct   POINT *Vertics[2][13];
    };


struct   PRuled
    {
    short    MatrixIndex;
    short    Udisp;
    struct   BSPLINE Bspl;
    };


struct   PFreeForm { int NU, NW; double *ControlPoints[50][50]; };


struct   Parameter
    {
    char     Label[8];
    double   value;
```

```
char      text[72];
short     mode;
};


union face_ptr
    {
    struct    PPlane        * PlaneFace;
    struct    PCylinder      * CircularCylinder;
    struct    PCone          * ConicFace;
    struct    PRuled         * RuledFace;
    struct    PFreeForm      * FreeFormFace;
    };


struct  PFace
    {
    short     FaceType;
    short     Fcode;
    union     face_ptr fclass;
    };


struct    Matrix
    {
    double    p1[3], p2[3], p3[3], p4[3];
    };


struct    PFaces
    {
    short     NumberFaces;
    short     NumberMatrix;
    short     NumberVar;
    short     ModVar;
    struct    PFace        *Face      [FSIZE];
    struct    Matrix       *Matrix    [MXSIZE];
    struct    Parameter    *Var       [VARSIZE];
    };
```

The next step converts the PFace data structure to a Face data structure for input into the solid modeler. The Face data structure is set forth below.

```
/*============================================================
:
: PART III - THE FACE TABE FOR INTERFACING WITH SOLID MODULE
:
:...........................................................
:
: define face table interface to solid
:
: define face tables
:
: MatrixIndex  stores the index to matrix list
: SameFace     stores the index to the first equivalent face
:              shall be maintained every time a object was created
: Matrix       the array will start from 13 to 39.
:
: FaceTable
:
:    FaceType :   1- PlaneFace
:                 2- Circular Cylinder
:                 3- ConeFace
:                 4- RuledFace
:                 5- FreeFormFace
:
:...........................................................
:
: IDENTIFICATION:
:
: AUTHOR ......... FRANK NIU
: DATE    ......... --/--/89
:
:...........................................................
```

```
*/

struct    PlaneFace
   {
   double   A, B, C, D;
   };


struct    CircularCylinder
   {
   double   R, X, Y, A1, A2, Z1, Z2;
   short    MatrixIndex;
   short    Udisp;
   struct    POINT *Vertics[2][13];
   };


struct    ConeFace
   {
   double   R1, R2, X, Y, A1, A2, Z1, Z2;
   short    MatrixIndex;
   short    Udisp;
   struct    POINT *Vertics[2][13];
   };


struct    RuledFace
   {
   short    MatrixIndex;
   short    Udisp;
   struct    BSPLINE Bspl;
   };


struct    FreeFormFace { int NU, NW; double *ControlPoints[50][50]; };


struct    FaceTable
   {
   short    FaceType;
```

```
struct    PlaneFace            *PlaneFace;
struct    CircularCylinder  *CircularCylinder;
struct    ConeFace             *ConeFace;
struct    RuledFace            *RuledFace;
struct    FreeFormFace         *FreeFormFace;
};


struct    Faces
  {
  short     NumberFaces;
  short     NumberMatrix;
  struct    FaceTable    *FaceTable  [FSIZE];
  struct    Matrix       *Matrix     [MXSIZE];
  };
```

Then, the Face data structure is input into the solid modeler to perform the extrusion taper operation as illustrated in function block **260**.   The attached data structure is used in the performance of this task.

```
/*======================================================


  :
  : PART IV - The construction tree
  :
  :.............................................................
  :
  : component list
  :
  : . operator :         0 disabled component
  :                      1 add component
  :                     -1 substract component
  :
  : . component type : 1 extrusion
  :                    2 taper
```

```
    :                        3 pyramid
    :                        4 rotataion
    :
    :.............................................................
    :
    : IDENTIFICATION:
    :
    : AUTHOR .......... ALLEN CHEN
    : DATE    ......... 10/15/89
    :
    :.............................................................
    */


struct   OneComponent
    {
    short    option;
    short    operator;
    short    numbdry;
    short    boundary[maxbdry];
    short    front, back;
    };


struct   Comphd
    {
    short    NumberComponent;
    struct   OneComponent * component[maxframe];
    };
```

Finally, the solid object is displayed on the graphics display as shown in output block **270**. The attached listing is the source code used to implement the various transformations and display of graphic information.

```
/****************************************************************-
**
```

```
* Common Header files

*************************************************************************
*/
#include <math.h>
#include <malloc.h>
#include "3dgm1.f"
#include "3dut1.f"
#include "3dmi1.f"
#include "units.h"
#include "bspline.h"
#include "param.h"
#include "stb.h"


/***********************************************************************-
**
  * Header files for C_gm_tels1d()

*************************************************************************
 */
#include "fkgp3d.h"


/***********************************************************************-
**
  * Header files for C_gm_trs1d3x()

*************************************************************************
 */
#include "gt3d.h"


/***********************************************************************-
**
  * Definitions for C_gm_tels1d()

*************************************************************************
```

```
*/
#define OrgPlane fclass.PlaneFace->pclass.Porg
#define Cylinder fclass.CircularCylinder
#define ConFace  fclass.ConicFace


/*****************************************************************-
**

 * Definitions for C_gm_trsld3x()


************************************************************************

 */
#define OrgPlane fclass.PlaneFace->pclass.Porg


/*****************************************************************-
**

 * Function declearations for C_gm_telsld()


************************************************************************

 */
static void  C_gm_1_remake_ABCD   ( short, double[],
                                    double, double, double, double,
                                    double*, double*, double*, double* );
static void  C_gm_1_remake_matrix ( short, double[],
                                    double[][3], double[][3] );
static void  C_gm_2_point_on_plane( double, double, double, double,
                                    double, double, double,
                                    double*, double*, double* );
static void  C_gm_2_rotate_point  ( double[], double[], double[] );
static void  C_gm_2_mirror_point  ( double[], double[], double[] );



/*****************************************************************
 * Function declearations for C_gm_trsld3x()
 ************************************************************************

 */
```

```
short C_trplnorm( short, double [], double[], double, double [], double *);
short C_trmxab ( double[],double[],double[],double[],double[]);
short C_trmxlc ( double[],double[],double[],double[],double[]);


/*****************************************************************************
* [Function Name]
*    iret = C_gm_telsld ( iopt, tdata, solid_ptr )
*
* [Category]
*    Geometric Calculation ( Translation of element )
*
* [Description]
*    Transform SOLID
*
* [Parameters]
*    (i) short   iopt     -- Processing Option
*                               1 : Translation (Move)
*                               2 : Mirroring
*                               3 : Rotation
*                               4 : Scaling
*
*    (i) double tdata[] -- Data for Translation
*                               iopt=1 => tdata[3]: DX,DY,DZ
*                               iopt=2 => tdata[12]:Data of Mirror Plane
*                               iopt=3 => tdata[7]: X,Y,Z (Point on Axis)
*                                                  A,B,C (Vextor of Axis)
*                                                  ANG   (Rotation Angle)
*                               iopt=4 => tdata[4]: X,Y,Z (Center of Scale)
*                                                  SCL   (Scaling Factor)
*
*    (i) short  solid_ptr[2] -- Pointer of Solid (In)
*
*    (o) short  iret     -- Return Code (0:OK, 1:Error)
*
```

```
*  [External Variables]

*        struct PFaces   PFaces

*        struct Comphd   CompList

*

*  [Calls]

*        Retv_Solid              ( defparam.c )

*        Q_subtype               (        ,,     )

*        Q_Plane_ABCD            (        ,,     )

*        Save_Parameters         (        ,,     )

*        Save_Solid              (        ,,     )

*        del_solid_polygons      ( entersd.c   )

*

*  [Restriction]

*

*  [Algorithm]

*

*        1. Get face table from elmptr

*        2. Transform face table

*        3. Transform working plane

*        4. Validate the transformed solid

*        5. Save the transfomed solid

*

*****************************************************************************

*

*   Created by     ....  Eiji Nakano

*       Date       ....  2/23/90

*

*****************************************************************************

*

*   Modified by    ....  Allen Chen

*       Date       ....  6/25/90

*       Nature(#1) ....  Change stb.h and param.h

*

*   Modified by    ....  Allen Chen

*       Date       ....  10/3/90
```

```
*       Nature(#2) ....  use local variables (PFaces, Solid, Complist)
*                        copy solid is a special case, done by cpysld() in
*                        solidmi.c.
*                        Fix error in scaling face table and working plane.
*
*****************************************************************************
*/


short C_gm_telsld( iopt, tdata, solid_ptr )
short  iopt;
short  solid_ptr[];
double tdata[];
{
    char   sname[128];
    char   lbl[8],str[72];
    short  fid,stype;
    short  ftype;
    short  iret;
    short  i;
    short  ihdata[10];
    short  pid,mode;
    double value;
    double A,B,C,D;
    double AA,BB,CC,DD;
    double new_matrix[4][3], old_matrix[4][3];

    struct PFaces *PFaces;
    struct Comphd *CompList;
    struct SolidTable *Solid;

    PFaces = (struct PFaces *) malloc (sizeof (struct PFaces));
    if (PFaces == 0)  return 200;
    CompList = (struct Comphd *) malloc (sizeof(struct Comphd));
    if (CompList == 0)
        {
```

```
      free(PFaces);
      return 200;
      }
Solid = (struct SolidTable *) malloc (sizeof(struct SolidTable));
if (Solid == 0)
      {
      free(PFaces);
      free(CompList);
      return 200;
      }


ihdata[0] = 0;


Retv_Solid( solid_ptr, PFaces, CompList, sname );


for( fid=1; fid<=PFaces->NumberFaces; fid++ )
{
    ftype = PFaces->Face[fid]->FaceType;
/*********/
/* plane */
/*********/
    if( ftype == 1 )
    {
        /*...................................................
          : Allen Chen 10/9/90
          : offset faces shall be scaled with scaling value
          :..................................................
        */
        Q_subtype( PFaces, fid, &stype );
        if ( stype != 0 )
           {
           if (iopt == 4)
              {
              iret = Q_OffFace(PFaces,fid,&pid,lbl,&value,str,&mode);
              if (iret == 0)
```

```
                  {
                  value *= tdata[3];
                  iret = Mod_OffFace((short)1,PFaces,pid,fid,value,str);
                  }
              }
          }
      else
          {
          Q_Plane_ABCD( PFaces, fid, &A, &B, &C, &D );

          C_gm_1_remake_ABCD( iopt, tdata, A, B, C, D,
                                                  &AA, &BB, &CC, &DD );

          PFaces->Face[fid]->OrgPlane.A = AA;
          PFaces->Face[fid]->OrgPlane.B = BB;
          PFaces->Face[fid]->OrgPlane.C = CC;
          PFaces->Face[fid]->OrgPlane.D = DD;
          }
      }
/*****************************************/
/* cylinder or conic  and  scaling */
/*****************************************/
    else if( (ftype == 2 || ftype == 3) &&  iopt == 4 )
    {
/*************/
/* cylinder */
/*************/
        if( ftype == 2 )
        {
            PFaces->Face[fid]->Cylinder->R *= tdata[3];
            PFaces->Face[fid]->Cylinder->X *= tdata[3];
            PFaces->Face[fid]->Cylinder->Y *= tdata[3];
        }
/*********/
/* conic */
```

```
/*********/
        else if( ftype == 3 )
        {   PFaces->Face[fid]->ConFace->R1 *= tdata[3];
            PFaces->Face[fid]->ConFace->R2 *= tdata[3];
            PFaces->Face[fid]->ConFace->X  *= tdata[3];
            PFaces->Face[fid]->ConFace->Y  *= tdata[3];
        }
    }
}


for( i=1; i<=PFaces->NumberMatrix; i++ )
{
    C_ut_dpsto( 3, PFaces->Matrix[i]->p1, old_matrix[0] );
    C_ut_dpsto( 3, PFaces->Matrix[i]->p2, old_matrix[1] );
    C_ut_dpsto( 3, PFaces->Matrix[i]->p3, old_matrix[2] );
    C_ut_dpsto( 3, PFaces->Matrix[i]->p4, old_matrix[3] );
    C_gm_1_remake_matrix( iopt, tdata, old_matrix, new_matrix );
    C_ut_dpsto( 3, new_matrix[0], PFaces->Matrix[i]->p1 );
    C_ut_dpsto( 3, new_matrix[1], PFaces->Matrix[i]->p2 );
    C_ut_dpsto( 3, new_matrix[2], PFaces->Matrix[i]->p3 );
    C_ut_dpsto( 3, new_matrix[3], PFaces->Matrix[i]->p4 );
}
/*...........................................................
 : Allen Chen 10/2/90
 : option 1 is replacing the model block with the new data.
 : See "solidmi.c" for details.
 :...........................................................
 */
iret = mksolid (PFaces, CompList, Solid);
if (iret == 0)
    iret = C_mi_sdstore ((short)1, PFaces, CompList, sname, ihdata, solid_ptr );

C_sd_cpftable(PFaces);
C_sd_ccompl(CompList);
FreeSolid (Solid);
```

```
      free (Solid);
      free (CompList);
      free (PFaces);
      if (iret != 0) iret = 1;
      return( iret );
   }


   /*=============================================================
   : static void C_gm_1_remake_ABCD( iopt, tdata, A, B, C, D, AA, BB, CC, DD )
   :
   :  make new plane data from old plane data
   :
   :  input    short    iopt    ---   1    move
   :                                  2    mirror
   :                                  3    rotate
   :                                  4    scale
   :            double   tdata[] --   Data for Translation
   :                                  iopt=1 => tdata[3]: DX,DY,DZ
   :                                  iopt=2 => tdata[12]:Data of Mirror Plane
   :                                  iopt=3 => tdata[7]: X,Y,Z (Point on Axis)
   :                                                      A,B,C (Vextor of Axis)
   :                                                      ANG   (Rotation Angle)
   :                                  iopt=4 => tdata[4]: X,Y,Z (Center of Scale)
   :                                                      SCL   (Scaling Factor)
   :            double   A,B,C,D  -   old plane data
   :
   :  output   double   *AA,*BB,*CC,*DD -   new plane data
   :.................................................................
   : Allen Chen 10/8/90
   : make the vector [AA,BB,CC] as unit vector
   :.................................................................
   */
   static void C_gm_1_remake_ABCD( iopt, tdata, A, B, C, D, AA, BB, CC, DD )
   short  iopt;
   double tdata[];
```

```
double A,B,C,D;
double *AA,*BB,*CC,*DD;
{
    double pt1[3],pt2[3],dist[3];
    double d;


/********/
/* move */
/********/
    if( iopt == 1 )
    {   *AA = A;
        *BB = B;
        *CC = C;
        *DD = A*tdata[0] + B*tdata[1] + C*tdata[2] + D;

    }
/**********/
/* mirror */
/**********/
    else if( iopt == 2 )
    {   C_gm_2_point_on_plane( A, B, C, D, 0.0, 0.0, 0.0,
                                    &pt1[0], &pt1[1], &pt1[2] );
        pt2[0] = pt1[0] + A;
        pt2[1] = pt1[1] + B;
        pt2[2] = pt1[2] + C;
        C_gm_2_mirror_point( pt1, tdata, pt1 );
        C_gm_2_mirror_point( pt2, tdata, pt2 );


        *AA = pt2[0] - pt1[0];
        *BB = pt2[1] - pt1[1];
        *CC = pt2[2] - pt1[2];
        d = sqrt((*AA)*(*AA) + (*BB)*(*BB) + (*CC)*(*CC));
        *AA /= d;
        *BB /= d;
        *CC /= d;
        *DD = *AA*pt1[0] + *BB*pt1[1] + *CC*pt1[2];
```

```
        }
/**********/
/* rotate */
/**********/
    else if( iopt == 3 )
    {   C_gm_2_point_on_plane( A, B, C, D, 0.0, 0.0, 0.0,
                                            &pt1[0], &pt1[1], &pt1[2] );
        pt2[0] = pt1[0] + A;
        pt2[1] = pt1[1] + B;
        pt2[2] = pt1[2] + C;
        C_gm_2_rotate_point( pt1, tdata, pt1 );
        C_gm_2_rotate_point( pt2, tdata, pt2 );

        *AA = pt2[0] - pt1[0];
        *BB = pt2[1] - pt1[1];
        *CC = pt2[2] - pt1[2];
        d = sqrt((*AA)*(*AA) + (*BB)*(*BB) + (*CC)*(*CC));
        *AA /= d;
        *BB /= d;
        *CC /= d;
        *DD = *AA*pt1[0] + *BB*pt1[1] + *CC*pt1[2];
    }
/*********/
/* scale */
/*********/
    else if( iopt == 4 )
    {   C_gm_2_point_on_plane( A, B, C, D, tdata[0], tdata[1], tdata[2],
                                            &pt1[0], &pt1[1], &pt1[2] );
        C_ut_dpsub( 3, pt1, tdata, dist );
        C_ut_dpmult( 3, tdata[3], dist, dist );
        C_ut_dpadd( 3, tdata, dist, pt1 );

        *AA = A / tdata[3];
        *BB = B / tdata[3];
        *CC = C / tdata[3];
```

```
        d = sqrt((*AA)*(*AA) + (*BB)*(*BB) + (*CC)*(*CC));
        *AA /= d;
        *BB /= d;
        *CC /= d;
        *DD = *AA*pt1[0] + *BB*pt1[1] + *CC*pt1[2];
    }

}
/*========================================================================
 : static void C_gm_1_remake_matrix( iopt, tdata, old_matrix, new_matrix )
 :
 :  make new matrix data from old matrix
 :
 :  input    short    iopt     --  1    move
 :                                 2    mirror
 :                                 3    rotate
 :                                 4    scale
 :            double   tdata[] --   Data for Translation
 :                                  iopt=1 => tdata[3]: DX,DY,DZ
 :                                  iopt=2 => tdata[12]:Data of Mirror Plane
 :                                  iopt=3 => tdata[7]: X,Y,Z (Point on Axis)
 :                                                      A,B,C (Vextor of Axis)
 :                                                      ANG   (Rotation Angle)
 :                                  iopt=4 => tdata[4]: X,Y,Z (Center of Scale)
 :                                                      SCL   (Scaling Factor)
 :            double   old_matrix[4][3] -- present matrix
 :  output   double   new_matrix[4][3] -- regenerated matrix
 */
static void C_gm_1_remake_matrix( iopt, tdata, old_matrix, new_matrix )
short   iopt;
double tdata[];
double old_matrix[][3];
double new_matrix[][3];
{
    short    i;
    double   pt1[3],pt2[3];
```

```
        double  dist[3];


/*********/
/* move */
/*********/
    if( iopt == 1 )
    {
       C_ut_dpadd( 3, old_matrix[3], tdata, new_matrix[3] );
       C_ut_dpsto( 3, old_matrix[0], new_matrix[0] );
       C_ut_dpsto( 3, old_matrix[1], new_matrix[1] );
       C_ut_dpsto( 3, old_matrix[2], new_matrix[2] );
    }
/***********/
/* mirror */
/***********/
    else if( iopt == 2 )
    {   pt1[0] = pt1[1] = pt1[2] = 0.0;
        C_gm_2_mirror_point( pt1, tdata, pt1 );


        for( i=0; i<3; i++ )
        {   C_gm_2_mirror_point( old_matrix[i], tdata, pt2 );
            C_ut_dpsub( 3, pt2, pt1, new_matrix[i] );
        }


        C_gm_2_mirror_point( old_matrix[3], tdata, new_matrix[3] );
    }
/***********/
/* rotate */
/***********/
    else if( iopt == 3 )
    {   pt1[0] = pt1[1] = pt1[2] = 0.0;
        C_gm_2_rotate_point( pt1, tdata, pt1 );


        for( i=0; i<3; i++ )
        {   C_gm_2_rotate_point( old_matrix[i], tdata, pt2 );
```

```
          C_ut_dpsub( 3, pt2, pt1, new_matrix[i] );

      }


      C_gm_2_rotate_point( old_matrix[3], tdata, new_matrix[3] );

  }
/*********/
/* scale */
/*********/
  else if( iopt == 4 )
  {
    C_ut_dpsub ( 3, old_matrix[3], tdata, dist );
    C_ut_dpmult( 3, tdata[3], dist, dist );
    C_ut_dpadd ( 3, tdata, dist, new_matrix[3] );

    C_ut_dpsto( 3, old_matrix[0], new_matrix[0] );
    C_ut_dpsto( 3, old_matrix[1], new_matrix[1] );
    C_ut_dpsto( 3, old_matrix[2], new_matrix[2] );

  }

}


/*=====================================================================
  : static void C_gm_2_point_on_plane(A,B,C,D, px,py,pz, x,y,z)
  : ....................................................
  : : by Allen Chen (2/28/90)
  : :
  : : find intersecting point of the plane(Ax+By+Cz=D)
  : : and the 3D line (vector(A,B,C) & point(px,py,pz) ).
  : :
  : : Note: the vector of the 3D line has to be the same as
  : :        the normal vector of the plane.
  : :.............................................................
  :
  : input    double  A,B,C,D      plane data
  :          double  px,py,pz     3D point
  :
```

```
       :  output   double   *x,*y,*z      intersecting point
    */
    static void C_gm_2_point_on_plane(A,B,C,D,  px,py,pz,  x,y,z)
    double A,B,C,D;
    double px,py,pz;
    double *x,*y,*z;
    {
        double tvalue;

        tvalue = ( D  - ( A*px + B*py + C*pz ) ) / ( A*A + B*B + C*C );
        *x = px + tvalue * A;
        *y = py + tvalue * B;
        *z = pz + tvalue * C;

    }
    /*=============================================================================
      : static void C_gm_2_rotate_point( pt1, tdata, pt2 )

      :

      :   find the point after rotation

      :

      :  input    double      pt1[3]     -- 3D point
      :           double      tdata[7]   -- rotating data: X,Y,Z (Point on Axis)
      :                                                    A,B,C (Vextor of Axis)
      :                                                    ANG   (Rotation Angle)
      :  output  double      pt2[3]     -- rotated point
    */
    static void C_gm_2_rotate_point( pt1, tdata, pt2 )
    double pt1[];
    double tdata[];
    double pt2[];
    {
        double  ptw[3],ptw2[3];
        double  matrix[4][3];

        C_gm_ptxln3( pt1, tdata, ptw );
        if( C_ut_dpdist( 3, pt1, ptw ) < UNITS.toler )
```

30

```
    {   C_ut_dpsto( 3, pt1, pt2 );
        return;
    }


    C_ut_dpadd( 3, tdata, &tdata[3], ptw );
    C_gm_crtpln( tdata, ptw, pt1, matrix[0] );


    C_gm_tran3d( 2, matrix[0], ptw, pt1 );


    ptw2[0] = ptw[0];
    ptw2[1] = ptw[1] * cos( tdata[6] );
    ptw2[2] = ptw[1] * sin( tdata[6] );


    C_gm_tran3d( 1, matrix[0], ptw2, pt2 );

}
/*=================================================================
 : static C_gm_2_mirror_point( pt1, tdata, pt2 )

 :

 :   find the mirroring point

 :

 :   input    double      pt1[3]     -- 3D point
 :            double      tdata[12] -- plane data
 :   output   double      pt2[3]     -- mirroring point
*/
static void C_gm_2_mirror_point( pt1, tdata, pt2 )
double pt1[];
double tdata[];
double pt2[];
{
    double ptw[3],dist[3];


    C_gm_ptxpl3( pt1, tdata, ptw );
    C_ut_dpsub( 3, ptw, pt1, dist );
    C_ut_dpadd( 3, ptw, dist, pt2 );

}
```

```
/****************************************************************
 * [Function Name]
 *     iret = C_gm_trs1d3x( iopt, mtrx, ptr )
 *
 * [Category]
 *     Geomatry Calculation
 *
 * [Description]
 *     Convert 3D Ruled Surface
 *
 * [Parameters]
 *     (i) short   iopt    -- Processing Option
 *                             1: Local(mtrx) ==> Absolute
 *                             2: Absolute ==> Local(mtrx)
 *
 *     (i) double mtrx[4][3] -  matrix of coordinate convention
 *
 *     (i/o) short ptr[2] --- pointer to Solid model block
 *
 *     (o) short   iret    -- Return code (0:OK,1:NG)
 *
 *
 * [External Variables]
 *
 * [Calls]
 *
 * [Restriction]
 *
 * [Algorithm]
 *
 ****************************************************************
 *
 *     Created by    .... Allen Chen
 *        Date       .... 10/23/90
 *
```

```
/*********************************************************************

*

*    Modified by    ....

*       Date         ....

*       Nature(#1) ....

*

*********************************************************************

*/


short   C_gm_trsld3x( iopt, mtrx, ptr )
short   iopt,ptr[];
double mtrx[];
{
    char    sname[128];
    short   fid,stype;
    short   ftype;
    short   iret;
    short   i;
    short   ihdata[10];
    double D;
    double DD;
    double pn[3], pnn[3];


    struct PFaces *PFaces;
    struct Comphd *CompList;
    struct SolidTable *Solid;


    PFaces = (struct PFaces *) malloc (sizeof (struct PFaces));
    if (PFaces == 0)   return 200;
    CompList = (struct Comphd *) malloc (sizeof(struct Comphd));
    if (CompList == 0)
        {
        free(PFaces);
        return 200;
        }
```

33

```
Solid = (struct SolidTable *) malloc (sizeof(struct SolidTable));
if (Solid == 0)
    {
    free(PFaces);
    free(CompList);
    return 200;
    }


Retv_Solid( ptr, PFaces, CompList, sname );
for( fid=1; fid<=PFaces->NumberFaces; fid++ )
    {
    ftype = PFaces->Face[fid]->FaceType;
    if( ftype == 1 )
        {
        /*..............................................................
          : Allen Chen 10/9/90
          : offset faces shall be scaled with scaling value
          :..............................................................
        */
        Q_subtype( PFaces, fid, &stype );
        if ( stype == 0 )
            {
            Q_Plane_ABCD( PFaces, fid, &pn[0], &pn[1], &pn[2], &D );

            iret = C_trplnorm( iopt, mtrx, pn, D, pnn, &DD );

            PFaces->Face[fid]->OrgPlane.A = pnn[0];
            PFaces->Face[fid]->OrgPlane.B = pnn[1];
            PFaces->Face[fid]->OrgPlane.C = pnn[2];
            PFaces->Face[fid]->OrgPlane.D = DD;
            }
        }
    }
if (iopt == 1 )
    for( i=1; i<=PFaces->NumberMatrix; i++ )
```

EP 0 488 578 A2

```
        {
        iret = C_trmxab ( mtrx, PFaces->Matrix[i]->p1,
                          PFaces->Matrix[i]->p2, PFaces->Matrix[i]->p3,
                          PFaces->Matrix[i]->p4);
        }
    else if (iopt == 2)
        for( i=1; i<=PFaces->NumberMatrix; i++ )
            {
            iret = C_trmxlc ( mtrx, PFaces->Matrix[i]->p1,
                              PFaces->Matrix[i]->p2, PFaces->Matrix[i]->p3,
                              PFaces->Matrix[i]->p4);
            }


    iret = mksolid (PFaces, CompList, Solid);
    if (iret == 0)
        iret = C_mi_sdstore ((short)1, PFaces, CompList, sname, ihdata, ptr );


    C_sd_cpftable(PFaces);
    C_sd_ccompl(CompList);
    FreeSolid (Solid);
    free (Solid);
    free (PFaces);
    free (CompList);
    if (iret != 0) iret = 1;
    return( iret );
}


short C_trplnorm( iopt, mtrx, n, D, nn, DD)
short iopt;
double mtrx[];
double n[], D;
double nn[], *DD;
{
    double t;
    double p[3], q[3];
```

```
    p[0] = D * n[0];
    p[1] = D * n[1];
    p[2] = D * n[2];

    if (iopt == 1)
       {
       C_gm_tran3d( 11, mtrx, n, nn);
       C_gm_tran3d(  1, mtrx, p, q);
       }
    else if (iopt == 2)
       {
       C_gm_tran3d( 12, mtrx, nn, n);
       C_gm_tran3d(  2, mtrx, q, p);
       }

    t = sqrt(nn[0]*nn[0] + nn[1]*nn[1] + nn[2]*nn[2]);
    if (t < 1.e-6) return 1;
    else if (fabs(t-1.0) > 1.e-6)
       {
       nn[0] /= t;
       nn[1] /= t;
       nn[2] /= t;
       }

    *DD = nn[0]*q[0] + nn[1]*q[1] + nn[2]*q[2];

    return 0;
}


short C_trmxab ( mtrx, p1, p2, p3, p4)
double mtrx[];
double p1[],p2[],p3[],p4[];
{
    double v[3], o[3], tv[3],len;
```

```
C_gm_tran3d( 1, mtrx, p4, o);

v[0] = p1[0] + p4[0];
v[1] = p1[1] + p4[1];
v[2] = p1[2] + p4[2];
C_gm_tran3d( 1, mtrx, v, tv);
tv[0] -= o[0];
tv[1] -= o[1];
tv[2] -= o[2];
len = sqrt(tv[0]*tv[0] + tv[1]*tv[1] + tv[2]*tv[2]);
p1[0] = tv[0]/len;
p1[1] = tv[1]/len;
p1[2] = tv[2]/len;
v[0] = p2[0] + p4[0];
v[1] = p2[1] + p4[1];
v[2] = p2[2] + p4[2];
C_gm_tran3d( 1, mtrx, v, tv);
tv[0] -= o[0];
tv[1] -= o[1];
tv[2] -= o[2];
len = sqrt(tv[0]*tv[0] + tv[1]*tv[1] + tv[2]*tv[2]);
p2[0] = tv[0]/len;
p2[1] = tv[1]/len;
p2[2] = tv[2]/len;


v[0] = p3[0] + p4[0];
v[1] = p3[1] + p4[1];
v[2] = p3[2] + p4[2];
C_gm_tran3d( 1, mtrx, v, tv);
tv[0] -= o[0];
tv[1] -= o[1];
tv[2] -= o[2];
len = sqrt(tv[0]*tv[0] + tv[1]*tv[1] + tv[2]*tv[2]);
p3[0] = tv[0]/len;
p3[1] = tv[1]/len;
```

```
    p3[2] = tv[2]/len;


    C_ut_dpsto (  3, o, p4);
    return 0;
}



short C_trmxlc ( mtrx, p1, p2, p3, p4)
double mtrx[];
double p1[],p2[],p3[],p4[];
{
    double v[3], tv[3], o[3],len;


    C_gm_tran3d( 2, mtrx, o, p4);


    v[0] = p1[0] + p4[0];
    v[1] = p1[1] + p4[1];
    v[2] = p1[2] + p4[2];
    C_gm_tran3d( 2, mtrx, tv, v);
    tv[0] -= o[0];
    tv[1] -= o[1];
    tv[2] -= o[2];
    len = sqrt(tv[0]*tv[0] + tv[1]*tv[1] + tv[2]*tv[2]);
    p1[0] = tv[0]/len;
    p1[1] = tv[1]/len;
    p1[2] = tv[2]/len;


    v[0] = p2[0] + p4[0];
    v[1] = p2[1] + p4[1];
    v[2] = p2[2] + p4[2];
    C_gm_tran3d( 2, mtrx, tv, v);
    tv[0] -= o[0];
    tv[1] -= o[1];
    tv[2] -= o[2];
    len = sqrt(tv[0]*tv[0] + tv[1]*tv[1] + tv[2]*tv[2]);
```

```
p2[ 0] = tv[ 0]/len;
p2[ 1] = tv[ 1]/len;
p2[ 2] = tv[ 2]/len;


v[ 0] = p3[ 0] + p4[ 0];
v[ 1] = p3[ 1] + p4[ 1];
v[ 2] = p3[ 2] + p4[ 2];
C_gm_tran3d( 2, mtrx, tv, v);
tv[ 0] -= o[ 0];
tv[ 1] -= o[ 1];
tv[ 2] -= o[ 2];
len = sqrt(tv[ 0]*tv[ 0] + tv[ 1]*tv[ 1] + tv[ 2]*tv[ 2]);
p3[ 0] = tv[ 0]/len;
p3[ 1] = tv[ 1]/len;
p3[ 2] = tv[ 2]/len;


C_ut_dpsto ( 3, o, p4);
return 0;
}
```

An alternative embodiment of the invention allows a tapered display of a solid object to be created. The logic implementing this function is set forth in Figure **3**. The initial steps set forth in function block **300** are identical to the solid generation discussed above. A two dimensional drawing is loaded. The user selects the solid taper menu function in input block **310**. Then, the user is prompted to select a plane representing the front cut face as shown in input block **320**. This is done by positioning the cursor on lines other than the profile view. Next, the user is prompted to select elements forming a profile of the front face as shown in input block **330**. The user selects the necessary two dimensional geometries in the profile view to form a profile for taper. Then the end menu is selected to indicate completion of profile processing.

Input block **340** depicts the user selection of the back face as the next step. The user selects lines in views other than the profile view to form a profile for the taper operation as shown in input block **350**. When the selection process is complete, the end menu item is selected. Then, in function block **360**, the two dimensional geometries are converted to three dimensional faces as depicted in function block **370** and a solid representation is generated. This processing includes conversion of the two dimensional geometries to three dimensional geometries and the corresponding conversion of data structures as discussed above. Finally, the solid is displayed as depicted in output block **380**. The data structure attached below is used to store the solid object for subsequent display.

```
/*************************************************
*                                                *
*     HEADER FILE FOR MICRO CADAM WRITTEN C LANGUAGE   *
*                                                *
***********************************************************
*                                                *
*     HEADER FILE NAME: PARAM.H                  *
*                                                *
***********************************************************
*                                                *
*     IDENTIFICATION:                            *
*                                                *
*         AUTHOR ......... Frank Niu             *
*         DATE    ......... 10/15/89             *
*                                                *
*         MODIFIED ....... Allen Chen            *
*         DATE     ....... 4/16/90               *
*         NATURE   ....... Add Spline            *
*                                                *
*         MODIFIED .......                       *
*         DATE     .......                       *
*         NATURE   .......                       *
*                                                *
*                                                *
```

```
       ****************************************************************
       *                                                            *
       *     NOTE ON USE:                                           *
       *                                                            *
       **************************************************************** /


       #define  SSIZE 20
       #define  LSIZE 400
       #define  ESIZE 600
       #define  VSIZE 600
       #define  BSIZE 50
       #define  CHLDSZ 100


       #define  SD_LINE   1
       #define  SD_CIRCLE 2
       #define  SD_SPLINE 4


       #define   F0 0.4142136
       #define   F1 0.5857864


       struct   LOOP_LIST
          {
          short    EdgeIndex;
          struct   LOOP_LIST   *back, *next;
          struct   LOOP_LIST   *link;
          short    used;
          };


       struct   VertexTable
          {
          short    f1, f2, f3;
          double   x, y, z;
          };

       struct   LINE
```

41

```
          {
          short    StartVertex;
          short    EndVertex;
          };


struct    CIRCLE
          {
          short    fid;
          short    StartVertex;
          short    EndVertex;
          double   A1, A2;
          struct   POINT *Vertics[13];
          };


struct    SPLINE
          {
          short    fid;          /* face number */
          short    StartVertex;
          short    EndVertex;
          struct   BSPLINE Bsp1;
          };


struct    EdgeTable
          {
          short    LeftLoop;
          short    RightLoop;
          short    EdgeType;
          struct   LINE     *Line;
          struct   CIRCLE   *Circle;
          struct   SPLINE   *Spline;
          };


struct    LoopTable
          {
          short    FaceIndex;
```

```
short    NumberEdges;
struct   LOOP_LIST   *ListHead;
struct   LOOP_LIST   *ListPtr;
short    DividingLoopEdge;
struct   LoopTable   *Ploop;
struct   LoopTable   *Cloop;
};


struct   SolidTable
  {
  char    name[40];
  short   NumberLoops;
  short   NumberEdges;
  short   NumberVertics;
  struct  LoopTable     *LoopTable  [LSIZE];
  struct  EdgeTable     *EdgeTable  [ESIZE];
  struct  VertexTable   *VertexTable[VSIZE];
  };


/*****************************************************************/
/*                                                             */
/*                        hole.h                               */
/*                                                             */
/*****************************************************************/


struct   POLYNODE
  {
  float    x,y,z;
  short    Show_Edge;
  struct   POLYNODE *next, *back;
  };


struct   POLYGON_AND_BOX
  {
  struct   POLYNODE *header, *ptr;
```

```
float     Xmin, Xmax, Ymin, Ymax, Zmin, Zmax;
};


struct   POLYGONS
     {
     struct    POLYGON_AND_BOX  *Parent;
     short     NumberChildren;
     struct    POLYGON_AND_BOX  *Children[CHLDSZ];
     };


struct   INTERSECTION
     {
     struct    POLYNODE      *NodePtr;
     short     PolyIndex;
     };
```

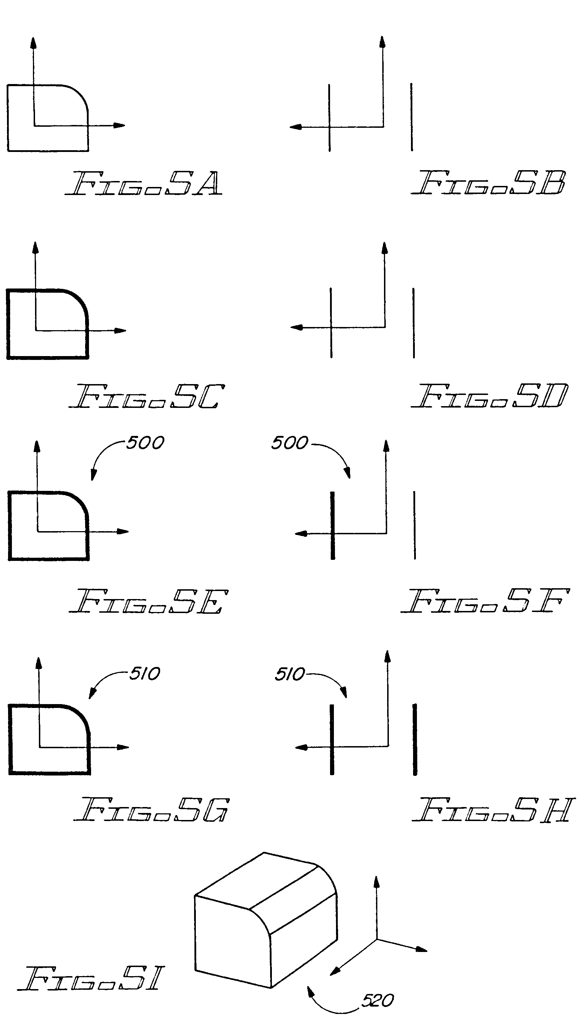

In Figures **4, 5, 6, 7 and 8**, examples of solid generations employing the subject invention are illustrated. In Figure **4**, a front view and a side view of a two dimensioal object are presented at label **400** and **410**. To generate a solid rendition of the two, two dimensional views, the user initially selects the four lines as the profile for extrusion on the front face at label **420**. Next, the back face is selected from the side view as indicated at label **430**, and finally, four lines of the back face are selected to form the profile as shown at label **440**. This information is used to generate a three dimensional solid object as illustrated at label **450**.

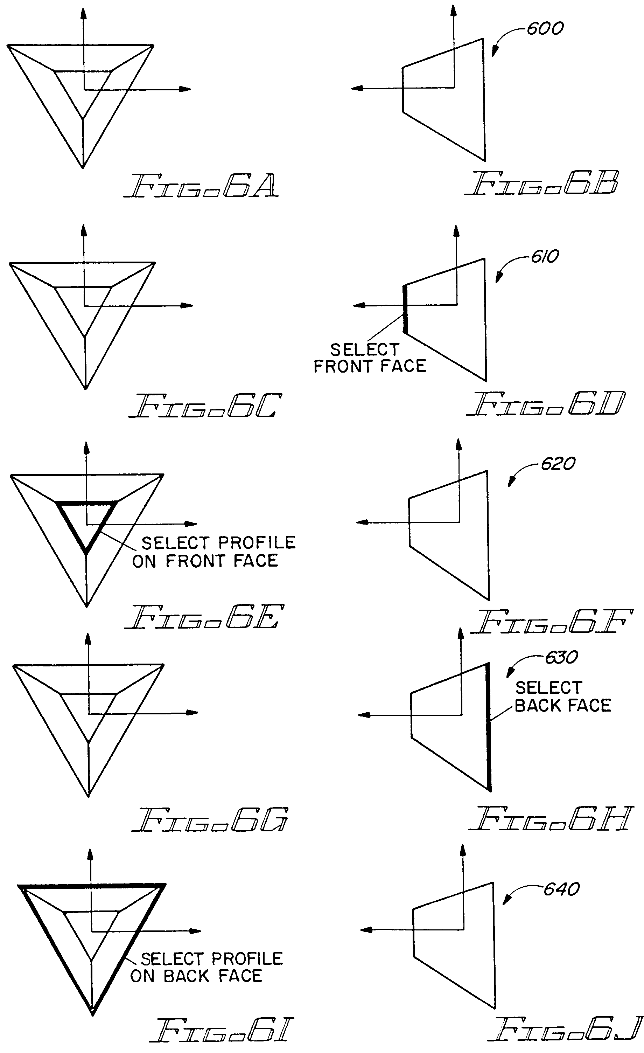

Figure **5** is another example of a extrusion. First, three lines and an arc are selected as a profile for extrusion as depicted at label **500**. Then, two two lines from a side view are selected to complete the operation as shown at label **510**. The solid object is then generated as shown at label **520**.

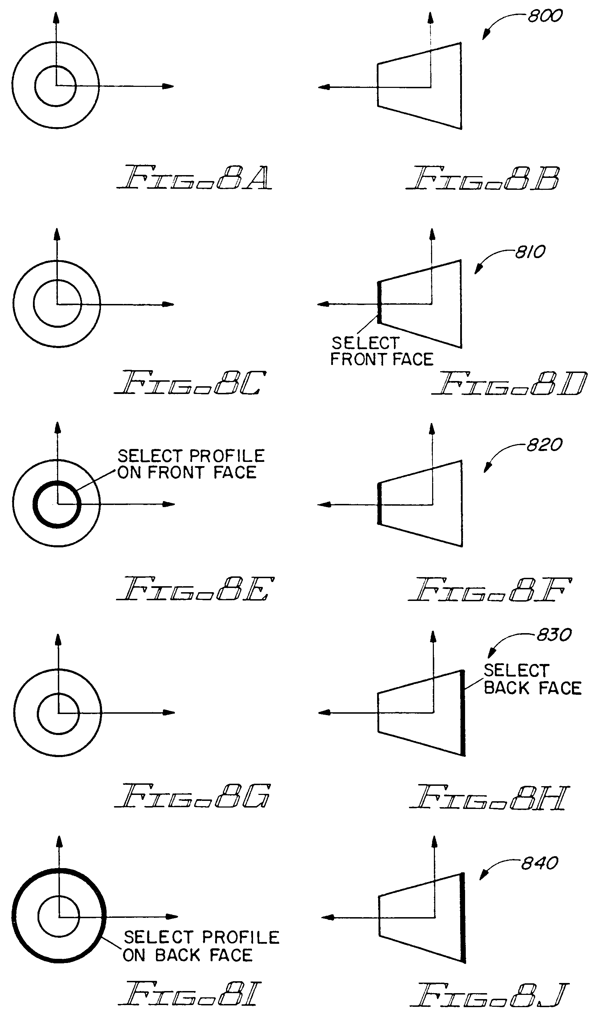

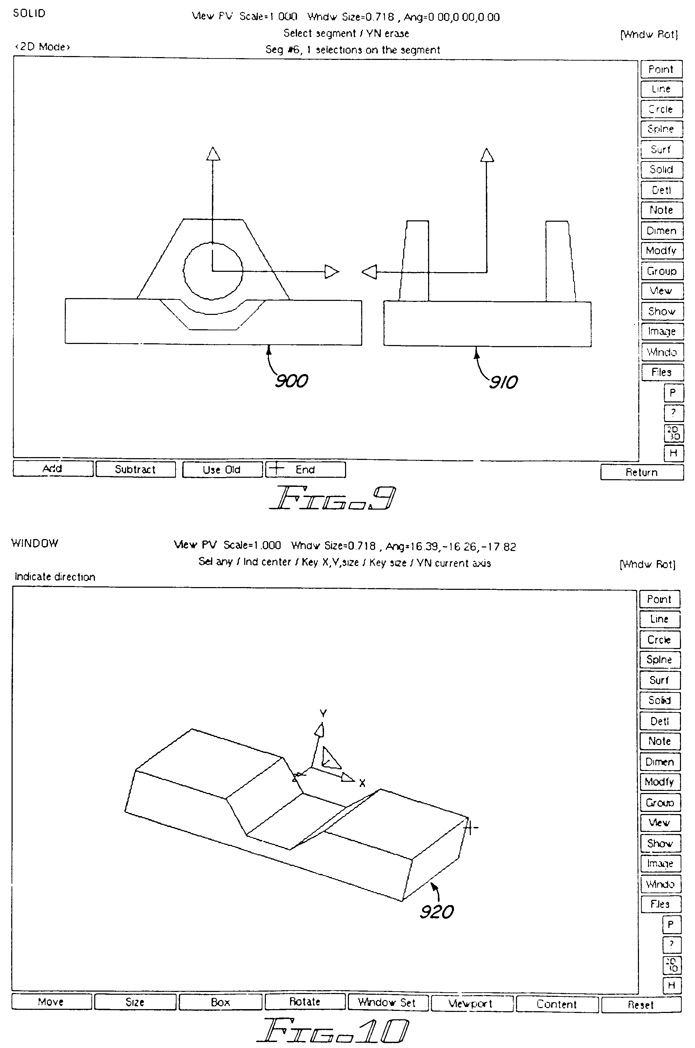

Figure **6** is another illustration of a solid generation. Again, two, two dimensional drawings are initially loaded and displayed as illustrated at label **600**. Then, the front face of one the two dimensional drawings is selected as show at label **610**. The profile for the front face is selected next as depicted at label **620**. Next, a back face is selected as shown at label **630**. Finally, the profile for the back face is selected as illustrated at label **640**, and the three dimensional solid is generated as illustrated at label **650** in Figure **7**.

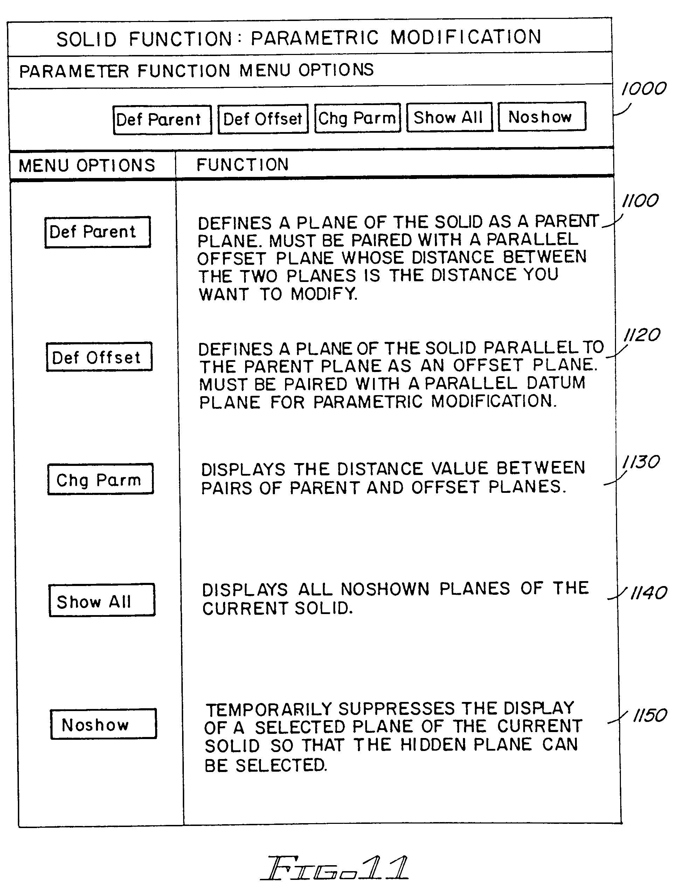

Figure **8** illustrates a circular extrusion. Two views of the object are initially drawn as illustrated at label **800**. Then, a front face is selected as noted at label **810**. Next, the front face profile is selected as illustrated at label **820**. Finally, the back face is selected at label **830**, and the profile of the back face is also selected as illustrated at label **840**. The resultant solid is displayed as shown at label **850**.

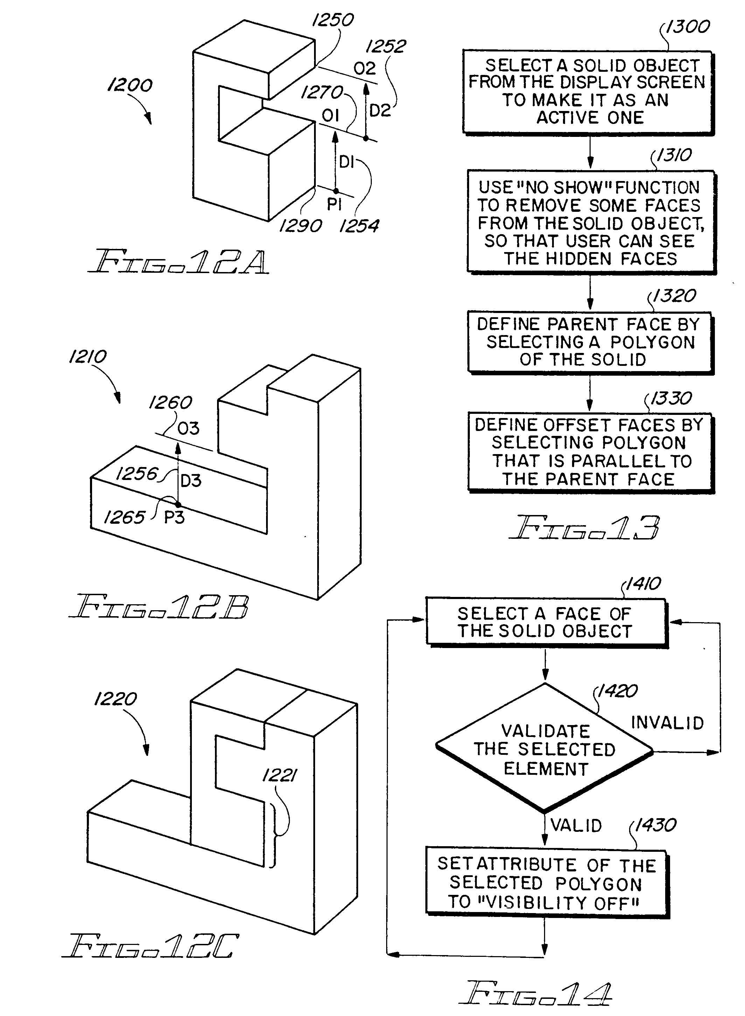

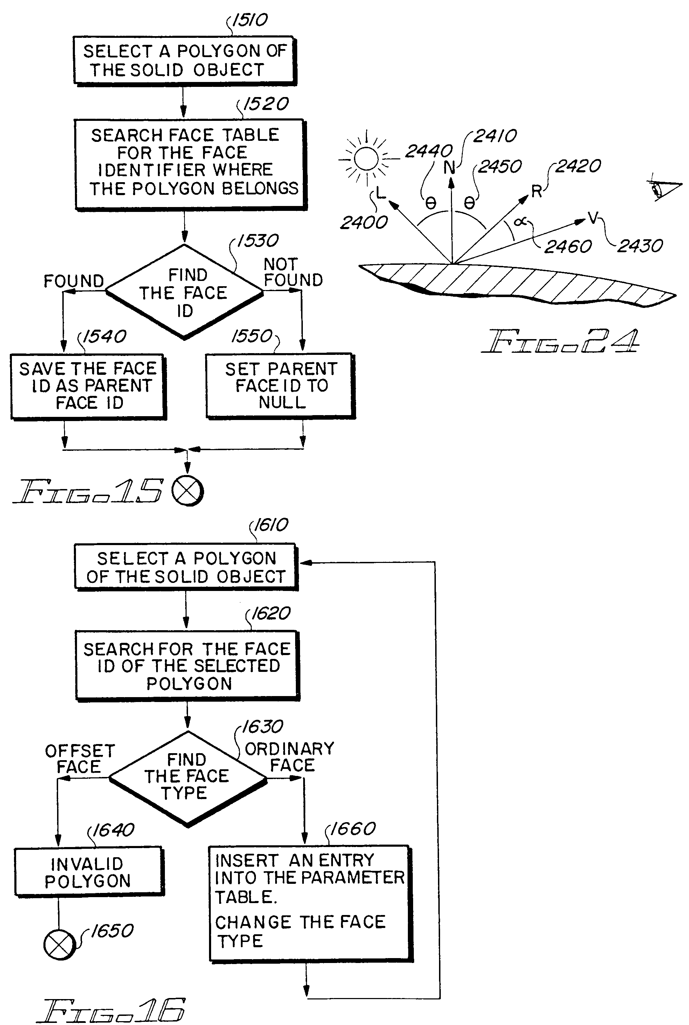

A further example involving a more complex geometry is presented in Figure **9** and **10**. In Figure **9**, a pair of two dimensional views of an object are presented at **900** and **910** respectively. A solid representation of the object is generated by selecting the front face and the back face. The generated solid is shown in Figure **10**.

**Parametric Entities**

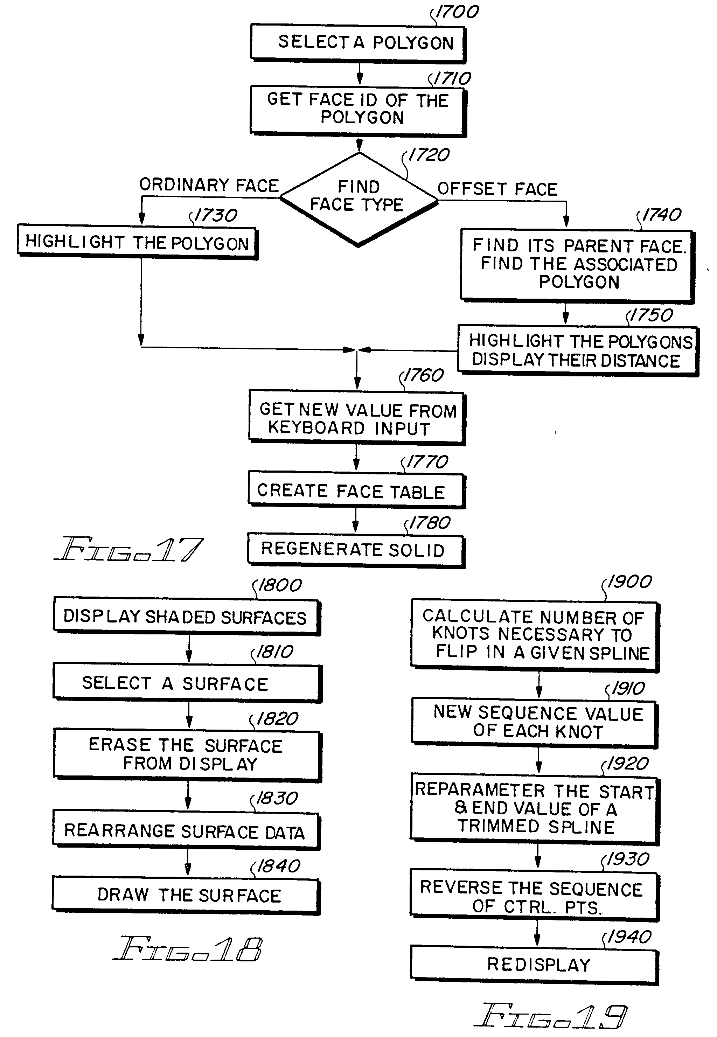

In Figure **11**, the solid function parametric modification menu options are listed and their fuctions are elaborated upon. At label **1000**, the menu options are displayed as they appear on a CAD display. If a user selects Def Parent at label **1100**, then the user is prompted to point to a plane of a solid that will function as the parent plane. The plane must be paired with a parallel offset plane whose distance is a variable that the user would like to change.

Label **1120** lists the Define Offset menu option. This option allows a user to define a plane of the solid parallel to the parent plane as an offset plane. Label **1130** depicts the Change Parameter menu option. This item is selected to display the distance value between pairs of parent and offset planes. Label **1140** depicts the Show All menu option. This option is selected to display all planes that are not currently displayed for the solid object. Label **1150** is the No Show option which temporarily suppresses the display of a selected plane of the current solid so that a hidden plane can be selected.

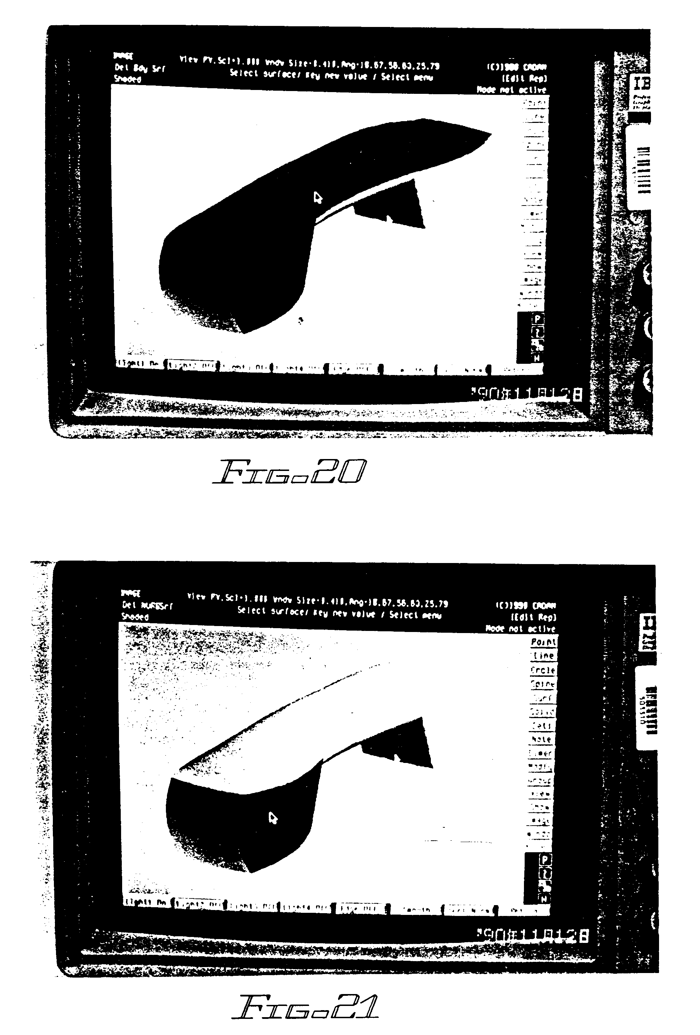

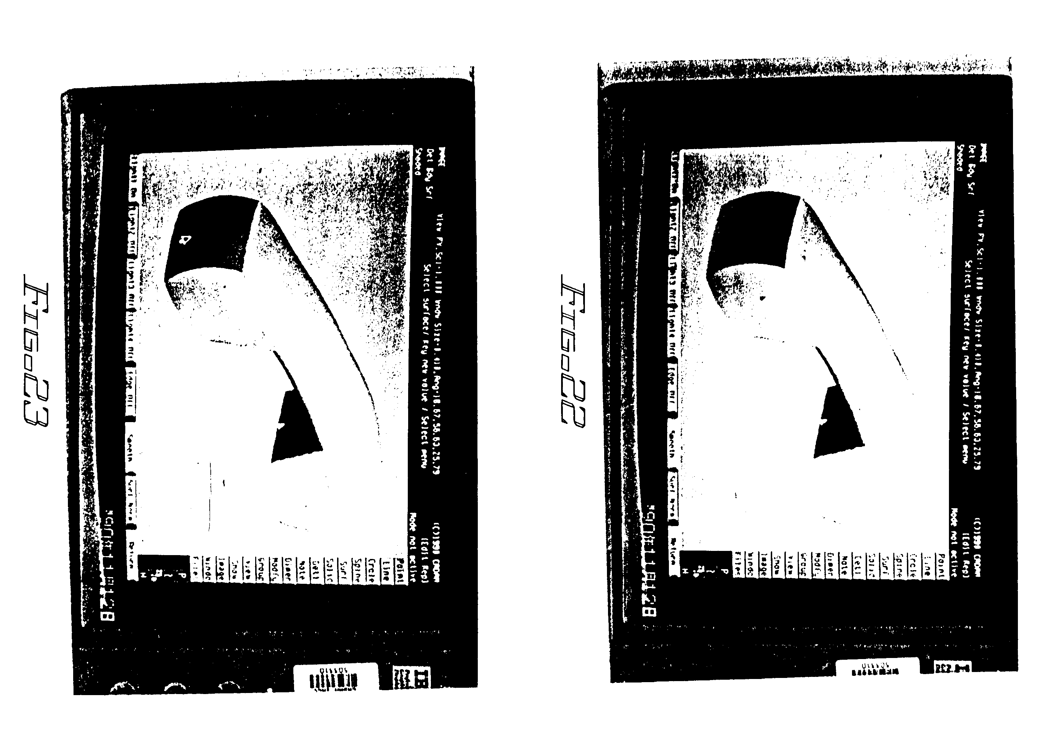

To commence a parametric design a user selects a solid object from the display as described in function block **1300** of Figure **13**, and shown at label **1200** of Figure **12**. Optionally, the user can remove some faces from the solid object using the No Show function as shown in function block **1310** of Figure **13**. Then, the user defines a parent face by selecting a polygon of the solid as shown in function block **1320** and depicted at **1290** of Figure **12**. Offset faces parallel to the first face are selected next as shown in function block **1330** and depicted at **1270** and **1250** of Figure **12**. The distances between the offset faces **1252** and the distance between the parent face and the first offset face **1254** are calculated. The distance D1 **1254** is a variable distance that will be adjusted. Whereas, the distance D2 **1252** is a fixed distance that remains constant during this operation.

If the user selects the NoShow function then the logic set forth in Figure **14** is employed to make the face invisible on the display. The user initially selects a polygon (face) of a solid and converts the pointer to a loop id as shown in function block **1410**. Then, the face is validated by searching the PFace table for the Face that contains the loop. If the face is found, then the selected polygon is a valid face as depicted in decision block **1420**. If not, then control flows to **1410**. If the face is valid, then the system sets the attribute of the selected polygon to visibility off as shown in **1430**.

The logic for defining a parent face is set forth in Figure **15**. As above, the user begins by selecting a polygon of the solid object as shown in function block **1510**. Then, the system searches the PFace table to identify the Face that contains the loop as depicted in function block **1520**. If the Face is identified in decision block **1530**, then the Face ID as the Parent Face ID as show in function block **1540**. However, if the Face ID is not found, then the Parent Face ID is set to a null value as shown in function block **1550**.

The logic for defining an offset face is set forth in Figure **16**. The user initially must select a polygon of the solid object as depicted in function block **1610**. Then, the PFace table is searched for the Face ID of the selected polygon as depicted in function block **1620**. A search is next made to determine the type of the Face and based on the type, control is passed to one of two function blocks **1650** or **1660**. If the Face type is ordinary, then control is passed to function block **1660** where the distance between the Parent Face and the offset face is calculated and an entry to the parameter table is made to reflect the change. Finally, the Face Type is also changed to Offset Face. If the Face Type is already an Offset Face, then an invalid polygon has been selected as shown in function block **1640**, and control is passed to an error routine. An Offset Face can be redefined as a parent face for another offset face to form a nested relation.

Figure **17** presents the logic implementiug the Change Parameter function. Function block **1700** indicates the first step is to select a polygon from the solid displayed on the graphic display. Then, the system searches through the PFace table for the face ID which the selected polygon is associated wit as slown in function block **1710**. Subsequently, the face ID is used to determine the face type as depicted in decision block **1720**. If the face type is an ordinary face, then the polygon is highlighted on the display as depicted in function block **1730**, the distance from the origin tot he face is displayed, and control passes to function block **1760**. However, if the face type is an offset face, then the PFace table is searched for the identifier of the parent face and the associated polygon as shown in function block **1740**. Then, the distance between the two offset faces is calculated, displayed and the polygons are highlighted as shown in function block **1750**.

Function block **1760** depicts the next step, prompting the user to enter a new value for the distance via the keyboard. The new value is used to update the parameter table. If the polygon is a parent offset type, then modify the parameter of the selected face. If it is an ordinary face, then the parameter of the ordinary face is modified. Then, as illustrated in function block **1770**, the PFace table is converted into a Face table. Finally, the solid is regenerated by sending the Face table and the construction list to the solid modeler to generate the modified solid as shown in function block **1780**.

Figure **12** shows a first solid **1200** and a second solid **1210** that are modified using the parametric entity function in accordance with the invention to create a finished assembly **1220**. The distance D1 **1254** in solid **1200** must be correlated with distance D3 **1256** to complete the assembly correctly. Thus, the user initially selects D1 **1254** as the variable distance from P1 **1290** to O1 **1270**. The distance D2 is defined as a fixed distance, and the variable distance is equated to D3 **1256**. Thereafter, the system expands D1 **1221** to comply with D3 **1256** and completes the assembly.

## Surface Normal Display

In a normal CAD system, a surface can he created regardless of the facing. However, a surface has two faces, one is facing in, and the other is facing out. Depending on the position or orientation of teh surface in a composite object. Surface normal is a reference for indicating the facing of a surface. It is also a vector for calculating the shading value. Since the surface normal is not specified during the creation of the surface, the image of the shaded surface may not appear correct to the viewer.

Examples of surfaces displayed which employ the subject invention are presented in Figures **20, 21, 22**

45

and **23**. The logic for the processing is set forth in the flowcharts illustrated in Figures **18** and **19**. Figure **24** illustrates the variables behind the mathmatics used to implement some of the invention's logic. Finally, the detailed source code and data structures used to implement the logic is presented and described below.

Referring to Figure **18**, function block **1800** shows the first step which displays the shaded surfaces without user specified shading. To shade the surface, the system generates polygons to approximate the surface. By shading each polygon according to the normals to the surface on each vertex of the polygon the shaded surface is indicated appropriately.

To shade a polygon, the system prepares a color table fo shading and calculates the intensity of each vertex of the polygon. The algorithm for preparing the color table is shown in the "C" listing set forth below. The logic has two steps. Step one: linearly interpolate the color values of red, green and blue (RGB) separately. To generate the three tables, (RGB) with constant incrementation from the specified ambient light value to the full color of the object. For the current display device, the shading color is generated into two-hundred levels.

Step two: the algorithm uses a cosine function on top of the result of step one to extend the range of the shading colors. The final color table will range from the specified ambient light value to shiny, bright color that will give the shaded object a sining spot when the reflection of the light source on the surface is toward the viewers eye.

```
/* * * * * * * * * * * * * * * * * * * * * * * * * * * * * * * * * *
                                                                    *
 *                                                                  *
 *      Function name    :  Build_xxxxxx_Color_Map ()               *
                                                                    *
 *                                                                  *
 * * * * * * * * * * * * * * * * * * * * * * * * * * * * * * * * * **
                                                                    *
 *                                                                  *
 *      Category          :  COLOR MAP MANAGEMENT_____  *
                                                                    *
 *                                                                  *
 * * * * * * * * * * * * * * * * * * * * * * * * * * * * * * * * * **
```

```
*                                                                    *
*    Description      :  Three major routines set up the color map   *
*                        for three shading modes._____     *
*                                                                    *
* * * * * * * * * * * * * * * * * * * * * * * * * * * * * * * * * **
*                                                                    *
*    Input             :  _____  -  _____                        *
*                                                                    *
* * * * * * * * * * * * * * * * * * * * * * * * * * * * * * * * * **
*                                                                    *
*    Output            :  _____  -  _____                        *
*                         _____  -  _____                        *
*                                                                    *
* * * * * * * * * * * * * * * * * * * * * * * * * * * * * * * * * **
*                                                                    *
*    Input/Output      :  _____  -  _____                        *
*                         _____  -  _____                        *
*                                                                    *
* * * * * * * * * * * * * * * * * * * * * * * * * * * * * * * * * **
*                                                                    *
*    Function returns  : _____      *
*                        _____      *
*                                                                    *
* * * * * * * * * * * * * * * * * * * * * * * * * * * * * * * * * **
*                                                                    *
*    Identification    :                                             *
*                         AUTHOR ............. Chris Chen             *
*                         DATE ............... 04/12/90               *
*                                                                    *
*                         MODIFIED BY ........ Allen Chen             *
*                         DATE ............... 04/27/90               *
*                         NATURE (#1)......... modify cal_indices     *
*                                                                    *
* * * * * * * * * * * * * * * * * * * * * * * * * * * * * * * * * **
*
```

47

```
*     Calls            :  _____  -  _____  *
*                                                                  *
* * * * * * * * * * * * * * * * * * * * * * * * * * * * * * * * * * **
*                                                                  *
*     Called by         :  _____  -  _____  *
*                                                                  *
* * * * * * * * * * * * * * * * * * * * * * * * * * * * * * * * * * **
*                                                                  *
*     Algorithm         :  Color map has been devided into three   *
*                          different sections, CADAM MAP, USERS MAP, *
*                          and SHADE MAP.  Their sizes are defined  *
*                          in file "shade.h".                       *
*                          CADAM MAP contains the RGB values of 16  *
*                          CADAM colors.                            *
*                                                                   *
*                          USERS MAP stores the RGB values of those *
*                          colors used by button, window, icon, and *
*                          text.  Currently, 16 entries are allocated *
*                          for USERS MAP.                           *
*                                                                   *
*                          SHADE MAP includes 216 entries which are *
*                          the shading colors for surface display.  *
*                                                                   *
*                          In Dither shading mode, 216 "fixed colors" *
*                          are reserved for HOOPS standard shading.  *
*                                                                   *
*                          In Constant shading mode, 216 colors are  *
*                          separated into 12 sections for the default *
*                          color and 11 CADAM object colors.  Each   *
*                          section contains 18 shade levels of the   *
*                          standard colors.                          *
*                                                                   *
*                          In Smooth shading mode, all colors are    *
*                          the different shade level of the selected  *
*                          shading color (first entry of USERS MAP).  *
```

```
 *                                                                        *
 * * * * * * * * * * * * * * * * * * * * * * * * * * * * * * * * * * * * * **
 *                                                                        *
 *      Glossary            :     _____    -    _____  *
 *                                _____    -    _____  *
 *                                                                        *
 * * * * * * * * * * * * * * * * * * * * * * * * * * * * * * * * * * * * * **
 *                                                                        *
 *      Notes on use        :   Normally, two colors are reserved for the *
 *                              display of mouse cursor, so the total      *
 *                              number of the available color is 254.      *
 *                              These colors can be classified into three  *
 *                              catagories :                               *
 *                                                                        *
 *                              The "regular color" is genererated by the  *
 *                              use of Set_Color_By_Value routines.  Each  *
 *                              color of different RGB value occupy one     *
 *                              entry on the hardware color lookup table,   *
 *                              and their value can not be changed or       *
 *                              delete by any HOOPS routine.                *
 *                                                                        *
 *                              The "fixed color" is used by the HOOPS to  *
 *                              generate the dither shading.                *
 *                                                                        *
 *                              The "map color" is stored in the virtual   *
 *                              color map of each segment.  Its RGB value   *
 *                              can be changed by the programmer.           *
 *                                                                        *
 *                              Due to the arrangement of the color map,    *
 *                              there is only one shading mode can exist    *
 *                              at any time.                                *
 *                                                                        *
 * * * * * * * * * * * * * * * * * * * * * * * * * * * * * * * * * * * * * */
#include <stdio.h>
#include <math.h>
```

```
#include "constd.h"
#include "color.h"
#include "shade.h"
#include "mltwdw.h"

/*-----------------------------------------------------------*/
/*                                                           */
/*     RGB color value for 64 EGA emulation colors           */
/*                                                           */
/*-----------------------------------------------------------*/

short color_table[64][3] =
{
    { 0, 0, 0},{ 0, 0,66},{ 0,66, 0},{ 0,66,66},{66, 0, 0},{66, 0,66},{66,66,
0},{66,66,66},

    { 0, 0,33},{ 0, 0,99},{ 0,66,33},{ 0,66,99},{66, 0,33},{66,
0,99},{66,66,33},{66,66,99},

    { 0,33, 0},{ 0,33,66},{ 0,99, 0},{ 0,99,66},{66,33, 0},{66,33,66},{66,99,
0},{66,99,66},

    { 0,33,33},{ 0,33,99},{ 0,99,33},{
0,99,99},{66,33,33},{66,33,99},{66,99,33},{66,99,99},

    {33, 0, 0},{33, 0,66},{33,66, 0},{33,66,66},{99, 0, 0},{99, 0,66},{99,66,
0},{99,66,66},

    {33, 0,33},{33, 0,99},{33,66,33},{33,66,99},{99, 0,33},{99,
0,99},{99,66,33},{99,66,99},

    {33,33, 0},{33,33,66},{33,99, 0},{33,99,66},{99,33, 0},{99,33,66},{99,99,
0},{99,99,66},
```

```
    {33,33,33},{33,33,99},{33,99,33},{33,99,99},{99,33,33},{99,33,99},{99,9-
9,33},{99,99,99}
};

RGB    Color_Map[COLOR_MAP_SIZE];

void   MC_Build_Color_Map ();
void   Show_Color_By_RGB (short index, short *R, short *G, short *B);
void   Show_Color_By_Value (short index, short *value);
void   Set_Color_By_RGB (short index, short R, short G, short B);
void   Set_Color_By_Value (short index, short value);

static void   Build_Normal_Color_Map ();
static void   Build_Dither_Color_Map ();
static void   Build_Constant_Color_Map ();
static void   Build_Gouraud_Color_Map ();
static void   Set_Cadam_Color_Map ();
static void   Set_Users_Color_Map ();


/*------------------------------------------------------------------*/
/*                                                                  */
/*     Initialize_Color_Map : Initialize color map.                 */
/*                                                                  */
/*------------------------------------------------------------------*/

void Initialize_Color_Map (short level)
{
   switch (level)
     {
        case 0 : COLOR.clmod    = 0;            /* Modal color number */
                 COLOR.clcur    = 1;            /* Current color number on side bar
*/

        case 1 : COLOR.clmct[0] = 63;
```

```
              COLOR.clmct[1] = 26;
              COLOR.clmct[2] = 63;
              COLOR.clmct[3] =  0;
              COLOR.clmct[4] =  0;
              COLOR.clmct[5] = 18;
              COLOR.clmct[6] = 27;
              COLOR.clmct[7] = 36;
              COLOR.clmct[8] = 54;
              COLOR.clmct[9] = 37;
              COLOR.clmct[10]= 26;
              COLOR.clmct[11]= 60;
              COLOR.clmct[12]= 52;
              COLOR.clmct[13]= 25;
              COLOR.clmct[14]=  9;
              COLOR.clmct[15]= 40;


     case 2 : COLOR.cldef[0] = COLOR.clmct[0];    /* DEFAULT COLOR */
              COLOR.cldef[1] = 0;
              COLOR.clbrt[0] = COLOR.clmct[1];    /* BRIGHT  COLOR */
              COLOR.clbrt[1] = 1;
              COLOR.clcsr[0] = COLOR.clmct[2];    /* CURSOR COLOR  */
              COLOR.clcsr[1] = 2;
              COLOR.clblk[0] = COLOR.clmct[3];    /* MESSAGE BACKGROUND */
              COLOR.clblk[1] = 3;
              COLOR.clbgr[0] = COLOR.clmct[4];    /* MODEL BACKGROUND */
              COLOR.clbgr[1] = 4;

              COLOR.clshd    = 57;                /* SHADING COLOR */
     }

     Set_Cadam_Color_Map ();
     Set_Users_Color_Map ();
     MC_Build_Color_Map ();
     }
```

```
/*-------------------------------------------------------------*/
/*                                                           */
/*      Show_Color_By_RGB : Inquire color RGB value of a color index.    */
/*                                                           */
/*-------------------------------------------------------------*/


void  Show_Color_By_RGB (short index, short *R, short *G, short *B)
{
   *R = color_table[COLOR.clmct[index]][0];
   *G = color_table[COLOR.clmct[index]][1];
   *B = color_table[COLOR.clmct[index]][2];
}


/*-------------------------------------------------------------*/
/*                                                           */
/*      Show_Color_By_Value : Inquire color value of a color index.    */
/*                                                           */
/*-------------------------------------------------------------*/


void Show_Color_By_Value (short index, short *value)
{
   if (index == 16) *value = COLOR.clshd;
   else             *value = COLOR.clmct[index];
}


/*-------------------------------------------------------------*/
/*                                                           */
/*      Set_Color_By_RGB : Modify color RGB value of a color index.    */
/*                                                           */
/*-------------------------------------------------------------*/


void  Set_Color_By_RGB (short index, short R, short G, short B)
{
   color_table[COLOR.clmct[index]][0] = R;
   color_table[COLOR.clmct[index]][1] = G;
```

```
    color_table[COLOR.clmct[index]][2] = B;

}


/*----------------------------------------------------------------*/
/*                                                                */
/*     Set_Color_By_Value : Modify color value of a color index.  */
/*                                                                */
/*----------------------------------------------------------------*/


void Set_Color_By_Value (short index, short value)
{
   if (index == 16) COLOR.clshd = value;
   else             COLOR.clmct[index] = value;

   Color_Map[CADAM_MAP0+index].R = color_table[value][0] / 99.0;
   Color_Map[CADAM_MAP0+index].G = color_table[value][1] / 99.0;
   Color_Map[CADAM_MAP0+index].B = color_table[value][2] / 99.0;

   HC_QModify_Color_Map_By_Value ("?picture", (int)index, "RGB",
                                  (int)1, &Color_Map[index].R);


   switch (SHADE.mode)
   {
      case -1: break;
      case  0: break;
      case  1: break;
      case  2: if (index > 4) Build_Constant_Color_Map ();
               break;
      case  3: if (index == 16) Build_Gouraud_Color_Map ();
               break;
      default: /* do nothing */;
   }
}

/*----------------------------------------------------------------*/
```

```
/*                                                                    */
/*    MC_Build_Color_Map () : Build color map for any shading condition*/
/*                                                                    */
/*--------------------------------------------------------------------*/
void  MC_Build_Color_Map ()
{
    switch (SHADE.mode)
  {
     case -1:
     case  0: Build_Normal_Color_Map ();
              break;
     case  1: Build_Dither_Color_Map ();
              break;
     case  2: Build_Constant_Color_Map ();
              break;
     case  3: Build_Gouraud_Color_Map ();
              break;
     default: /* do nothing */;
  }
}


/*--------------------------------------------------------------------*/
/*                                                                    */
/*    Build_Normal_Color_Map : Set up normal wireframe color map.     */
/*                                                                    */
/*--------------------------------------------------------------------*/

static void Build_Normal_Color_Map ()
{
   if (COLOR.cldpf <= 16)
   {
      HC_Open_Segment ("?picture");
         HC_UnSet_Color_Map ();
         HC_Set_Driver_Options ("fixed colors = 0");
         HC_Set_Color_Map_By_Value ("RGB", CADAM_MAP_SIZE, Color_Map);
```

```
      HC_Close_Segment();
   }
   else
   {
      HC_Open_Segment ("?picture");
         HC_UnSet_Color_Map ();
         HC_Set_Color_Map_By_Value ("RGB", BASIC_MAP_SIZE, Color_Map);
#ifdef NTH
         HC_Set_Driver_Options ("fixed colors = 125");
#else
         HC_Set_Driver_Options ("fixed colors = 216");
#endif
         HC_Close_Segment();
   }
}


/*------------------------------------------------------------------*/
/*                                                                  */
/*      Build_Dither_Color_Map : Set up dither shading mode color map.  */
/*                                                                  */
/*------------------------------------------------------------------*/

static void Build_Dither_Color_Map ()
{
   if (COLOR.cldpf <= 16)
   {
      HC_Open_Segment ("?picture");
         HC_UnSet_Color_Map ();
         HC_Set_Color_Map_By_Value ("RGB", COLOR.cldpf-8, Color_Map);
         HC_Set_Driver_Options ("fixed colors = 8");
      HC_Close_Segment();
   }
   else
   {
```

```
        HC_Open_Segment ("?picture");

            HC_UnSet_Color_Map ();

            HC_Set_Color_Map_By_Value ("RGB", BASIC_MAP_SIZE, Color_Map);
#ifdef NTH

            HC_Set_Driver_Options ("fixed colors = 125");

#else

            HC_Set_Driver_Options ("fixed colors = 216");

#endif

        HC_Close_Segment();

    }

}




/*-------------------------------------------------------------------*/

/*                                                                   */

/*    Build_Constant_Color_Map : Set up constant shading color map.  */

/*                                                                   */

/*-------------------------------------------------------------------*/



static void Build_Constant_Color_Map ()

{

    short i, j, k, lstart, index;

    float x;


    if (COLOR.cldpf <= 16) return;



    /*.............................................................

      : by A. Chen

      :

      : MAXLEV : The maximum number of gray level.

      :           This value is defined in file "shade.h"

      : LEVEL  : number of gray levels to be used for fine shading

      :.............................................................

    */
```

```
/* Calculate gray level for default & 11 CADAM colors */


lstart = MAXLEV - LEVEL;
for (i = 0;  i <= 11;  i++)
{
    if (i == 0) index = COLOR.cldef[0];
    else         index = COLOR.clmct[i+4];


    for (j = SHADE_MAP0 + i*LEVEL,  k = 0;  k < LEVEL;  j++, k++)
    {
        x = 0.01 * (lstart + k) / MAXLEV;
        Color_Map[j].R = color_table[index][0] * x;
        Color_Map[j].G = color_table[index][1] * x;
        Color_Map[j].B = color_table[index][2] * x;
    }
}


HC_Open_Segment ("?picture");
    HC_UnSet_Color_Map ();
    HC_Set_Driver_Options ("fixed colors = 0");
    HC_Set_Color_Map_By_Value ("RGB", COLOR_MAP_SIZE, Color_Map);
HC_Close_Segment();
}



/*-----------------------------------------------------------------------*/
/*                                                                     */
/*    Build_Gouraud_Color_Map : Set up Gouraud shading mode color map. */
/*                                                                     */
/*-----------------------------------------------------------------------*/


static void Build_Gouraud_Color_Map ()
{
    short i;
    RGB    Camb, M;
```

```
        float pai, Rstep, Gstep, Bstep;
        float cosa[GOURAUD_COLOR_SIZE];
        float PI = 3.1415926;
        float range;
        float amb;


        if (COLOR.cldpf <= 16) return;


        /*...........................................
          : Allen Chen, 4/25/90
          : amb : ambient factor will be referenced as a
          : global variable which can be defined by users.
          : The factor makes the range of gouraud color map
          : run between amb and 1.0. It discards the colors
          : under amb and gives more gray leves to visible
          : range.
          : if amb is defined as global variable then the
          : color map will range from amb to somewhere close
          : to 1.0. Thus, the routine calculate_indices()
          : shall be rewritten to produce correct indices.
          : For now, the value of amb is set to 0.0.
          :..........................................
          */


        amb = 0.0;
        range = (float)((GOURAUD_COLOR_SIZE - 1) * (short)100);
        pai = (float)(PI_D / (double) ((short)GOURAUD_COLOR_SIZE * (short)2));


        for (i= 0; i < GOURAUD_COLOR_SIZE; i++)
            cosa[GOURAUD_COLOR_SIZE-1-i] = pow (cos (i*pai), 5);
        /*...........................................
          : Allen Chen, 4/25/90
          : find ambient color of RGB.
          : RGB step is adjusted by ambient color
          :..........................................
```

```
      */
      Camb.R = color_table[COLOR.clshd][0] * amb;
      Camb.G = color_table[COLOR.clshd][1] * amb;
      Camb.B = color_table[COLOR.clshd][2] * amb;


      Rstep = (color_table[COLOR.clshd][0] - Camb.R) / range;
      Gstep = (color_table[COLOR.clshd][1] - Camb.G) / range;
      Bstep = (color_table[COLOR.clshd][2] - Camb.B) / range;


      for (i = 0; i < GOURAUD_COLOR_SIZE; i++)
      {
         M.R = i * Rstep + Camb.R;
         M.G = i * Gstep + Camb.G;
         M.B = i * Bstep + Camb.B;
         Color_Map[SHADE_MAP0 + i].R = M.R + (1-M.R) * cosa[i] * 0.5;
         Color_Map[SHADE_MAP0 + i].G = M.G + (1-M.G) * cosa[i] * 0.5;
         Color_Map[SHADE_MAP0 + i].B = M.B + (1-M.B) * cosa[i] * 0.5;


#ifdef DEBUG
         printf("colormap[%d]=(%1f,%1f,%1f)\n", COLOR_MAP_SIZE-1-i,
            Color_Map[SHADE_MAP0 + i].R,
            Color_Map[SHADE_MAP0 + i].G,
            Color_Map[SHADE_MAP0 + i].B);
#endif
      }

      HC_Open_Segment ("?picture");
         HC_UnSet_Color_Map ();
         HC_Set_Driver_Options ("fixed colors = 0");
         HC_Set_Color_Map_By_Value ("RGB", COLOR_MAP_SIZE, Color_Map);
      HC_Close_Segment();
   }


/*----------------------------------------------------------------------*/
/*                                                                      */
```

```
/*      Set_Cadam_Color_Map : Set sixteen CADAM basic color map.            */
/*                                                                          */
/*------------------------------------------------------------------------*/


static void Set_Cadam_Color_Map ()
{
   short i;

   for (i = 0;  i < CADAM_MAP_SIZE;  i++)
   {
      Color_Map[CADAM_MAP0+i].R = color_table[COLOR.clmct[i]][0] / 99.0;
      Color_Map[CADAM_MAP0+i].G = color_table[COLOR.clmct[i]][1] / 99.0;
      Color_Map[CADAM_MAP0+i].B = color_table[COLOR.clmct[i]][2] / 99.0;
   }
}



/*------------------------------------------------------------------------*/
/*                                                                          */
/*      Set_Users_Color_Map : Set user shading color map.                   */
/*                                                                          */
/*------------------------------------------------------------------------*/


static void Set_Users_Color_Map ()
{
   short i;
   float gray;
   RGB   white, brite;

   Color_Map[USERS_MAP0].R = color_table[COLOR.clshd][0] / 99.0;
   Color_Map[USERS_MAP0].G = color_table[COLOR.clshd][1] / 99.0;
   Color_Map[USERS_MAP0].B = color_table[COLOR.clshd][2] / 99.0;

   /* set 5 gray shades */
   white.R = 0.75;
```

```
white.G = 1.0;
white.B = 1.0;
brite.R = color_table[COLOR.clbrt[0]][0] / 99.0;
brite.G = color_table[COLOR.clbrt[0]][1] / 99.0;
brite.B = color_table[COLOR.clbrt[0]][2] / 99.0;
for (i = 1; i <= 5; i++)
{
    switch (i)
    {
        case 1: gray = 0.125; break;
        case 2: gray = 0.195; break;
        case 3: gray = 0.306; break;
        case 4: gray = 0.479; break;
        case 5: gray = 0.75;
    }
    Color_Map[USERS_MAP0+i].R = white.R * gray;
    Color_Map[USERS_MAP0+i].G = white.G * gray;
    Color_Map[USERS_MAP0+i].B = white.B * gray;
    Color_Map[USERS_MAP0+5+i].R = brite.R * gray;
    Color_Map[USERS_MAP0+5+i].G = brite.G * gray;
    Color_Map[USERS_MAP0+5+i].B = brite.B * gray;
}
for (i = USERS_MAP0+11; i < USERS_MAP_SIZE; i++)
{
    Color_Map[USERS_MAP0+i].R = 1.0;
    Color_Map[USERS_MAP0+i].G = 1.0;
    Color_Map[USERS_MAP0+i].B = 1.0;
}
}
```

To shade a polygon, the illumination value of each vertex must be calculated. Illumination (I) is calculated with the following equation.

$$I = Amb * Ka + Lv * Kd * (L \times N) + Ks * (R \times V)^m$$

Referring to Figure **24,** Amb is the ambient light value. Ka indicates how much of the ambient light is reflected from the objects surface. Lv is the intensity of the light source. L **2400** is the light vector. N **2410** is normal to the surface at the vertex. (L x N) **2440** is the cosine value of the angle between L vector and N vector. Kd indicates how much of the diffused light reflected from the surface. R **2420** is the reflection vector. V **2430** is the vector from the vertex to the eye. (R x V) **2460** is the cosine of the angle between vector R and vector V.

Since the illumination value is a sum of the ambient factor, diffuse factor and specular factor, the result may not fall within the acceptable range. Especially, we there are multiple light sources and the graphic hardware has a limited resolution. Thus, the following modification to the original equation is made to enhance shading.

$$I = Max(I[1], I[2], I[3],... I[n])$$

$$I[i] = A + (1-A) * D[i] + (1-A-(1-A)*D[i] * S[i];$$

where i = 1,2..n for n light sources. I[i] is the illumination value for the ith light source. A = amb * Ka; D[i] = Lv[i] * (L[i] x N); S[i] = (Rx V)$^m$

When the intensity of each vertex of a polygon is resolved, the intensity is converted to an index to the color table. (See data structure listing below)

```
/*******************************************************************************
*                                                                             *
*                                                                             *
*                           Calculate Indices                                 *
*                                                                             *
*                                                                             *
* -------------------------------------------------------------------------- *
```

```
*                                                                          *
* The routine returns the index to the color map for the given Normal      *
* and my_lights[4].                                                        *
*                                                                          *
* eye vector: come form window matrix (zvector)                           *
* light vector: was transformed form world system to window system (active)*
*                                                                          *
*                                                                          *
*                                                                          *
*--------------------------------------------------------------------------*
* Author      : Allen Chen                                                 *
*                                                                          *
*                                                                          *
*                                                                          *
  ****************************************************************************
*/

void calculate_indices( Normal, my_lights, index )
   double  Normal[];
   VECTOR  my_lights[4];
   short   *index;


   {

   VECTOR eye, refraction, norm;
   float  amb, difus;
   float  t1, t2, coso, cosa, cosr,ta;

   float max_color;
   short light_num;
   float range;
   /*.............................................................
    :.............................................................
    */
   range   = (float) (GOURAUD_COLOR_SIZE - 1);
```

```
amb      = 0.1;
difus    = 0.5;

eye.x = WDW3D.wzvec[0];
eye.y = WDW3D.wzvec[1];
eye.z = WDW3D.wzvec[2];
norm.x = (float) Normal[0];
norm.y = (float) Normal[1];
norm.z = (float) Normal[2];

dot_vectors ( &cosr, eye, norm );
if (cosr <= 1.e-3) cosr = 0.0;

max_color = 0.0;
for ( light_num=0; light_num< 4; light_num++)
{
    if( SHADE.light[light_num] == ON )
      {
      coso = my_lights[light_num].x*norm.x
           + my_lights[light_num].y*norm.y
           + my_lights[light_num].z*norm.z;

      if ((coso <= 0.0 ) || (coso > 1.0)) coso = 0.0;

      refraction.x = -my_lights[light_num].x + 2*coso * norm.x;
      refraction.y = -my_lights[light_num].y + 2*coso * norm.y;
      refraction.z = -my_lights[light_num].z + 2*coso * norm.z;
      t1  = sqrt ( refraction.x * refraction.x +
                   refraction.y * refraction.y +
                   refraction.z * refraction.z);

      refraction.x /= t1;
      refraction.y /= t1;
      refraction.z /= t1;
```

```
dot_vectors ( &cosa, refraction, eye );

if ((coso > 0.0 ) && (cosa > 0.0) && (cosr > 0.0))
   {
   ta = cosa * cosa;
   cosa = ta*ta*cosa;
   }
else
   {
   cosa = 0.0;
   }

t1 = amb + coso * ( 1.0 - amb ) * difus; /*ambient + diffuse*/
t2 = t1 + ( 1.0 - t1 ) * cosa;            /*complement factor */
}
else
   t2 = amb;

if( t2 > max_color ) max_color = t2;
}

*index = (short)SHADE_MAP0 + (short)(max_color * range + (float)0.5);


}
```

Then, the user is prompted to select a particular surface to display as shown in function block **1810**. The surface is selected by pointing with the cursor and using the pointers coordinates to select the appropriate surface from the CADAM data base. Next, the selected surface is erased as shown in function block **1820**. Then, the surface data is rearranged as set forth in function block **1830**.

Four kinds of surface data can be rearranged, ruled surfaces, revolved surfaces, boundary surfaces, boundary surfaces and skin surfaces. The data structure of these surfaces is set forth below.

```
/*...........................................................
  : Allen Chen 8/23/90
  :
  : The files include this header
  : ----------------------------

*/


#ifndef BSPLINE_H_FILE
        #define BSPLINE_H_FILE


#define MAXSplineKnots 50
#define MAXKnots 56
#define MAXControlPoints 52
#define GLOBAL_TO_LOCAL 1
#define LOCAL_TO_GLOBAL 2



struct BSPLINE
{
    /*...........................................................
      : A. Chen
      :
      : Attributes
      :   Bclosed      0/open        1/closed
      :   Bperiodic    0/nonperiodic 1/periodic
      :   Brational    0/nonrational 1/rational
      :   Bplanar      0/nonplanar   1/planar
      :
      : Data
```

```
    :   Order  : order of the B spline
    :   Nknots : the number of knots in the array KnotSequence[]
    :   Ncp    : the number of control points in ControlPoints[]
    :   Start  : starting knot sequece of the curve (relimit data)
    :   End    : ending knot sequence of the curve (relimit data)
    :............................................................
    */
    short   Bclosed;
    short   Bperiodic;
    short   Brational;
    short   Bplanar;
    short   Order;
    short   Nknots;
    short   Ncp;
    double  Start, End;
    double  KnotSequence [MAXKnots];
    struct POINT *ControlPoints [MAXControlPoints];
};


struct SURFACE
{
    short   Udisp, Wdisp;
    short   BUclosed,   BWclosed;
    short   BUperiodic, BWperiodic;
    short   BUrational, BWrational;
    short   Uorder, Worder;
    short   NknotsU, NknotsW;
    double  KnotSequenceU[MAXKnots], KnotSequenceW[MAXKnots];
    struct POINT *ControlPoints[MAXControlPoints][MAXControlPoints];
};


struct RULEDSURFACE
{
    short   Udisp, Wdisp;
    struct BSPLINE  B_Spline1,  B_Spline2;
```

```
};


struct ROTATIONAL_SURFACE
{
    double A[3], B[3], C[3], Origin[3];
    double A1, A2;
    short  Udisp, Wdisp;
    struct BSPLINE   *B_Spline;
};


struct EDGE_SURFACE
    {
    short  Udisp, Wdisp;
    struct BSPLINE   B_Spline[4];
    };


#endif
```

For ruled surfaces or revolved surfaces, the sequences of the control points are inverted and the knot sequences of its splines are calculated. For boundary surfaces, the sequences of the control points of spline one and two are inverted, and their knot sequences are recalculated. Splines three and four are swapped. For skin surfaces, each profile spline has its corresponding control points inverted and the knot sequences are recalculated. Figure **19** sets forth the detailed logic presented in function blocks **1830** and **1840**.

Finally, as shown in function block **1840**, the selected surface is shaded based on the rearranged information.

**Boundary Surfaces**

As introduced, a boundary surface stores four splines which form a closed boundary of the surface. The surface normal processing logic is set forth below.

```
short C_sf_rnormbsf(ptr)
short ptr[];
{
    short   ret;
    short   i,j;
    short   w2,w,j2;
    double  tx,ty,tz;
    struct SURFACE *SkinSurface;

    SkinSurface = (struct SURFACE *) malloc (sizeof (struct SURFACE));
    if (SkinSurface == 0) return 200;

    ret = ssr_GetSurfaceData( ptr, SkinSurface );
    if( ret == 0 )
        {
        w  = SkinSurface->NknotsW-4;
        w2 = w/2;
        for( i=0; i<SkinSurface->NknotsU-4; i++)
           for( j=0; j<w2; j++ )
              {
              j2 = w-j-1;
              tx = SkinSurface->ControlPoints[i][j]->x;
              ty = SkinSurface->ControlPoints[i][j]->y;
              tz = SkinSurface->ControlPoints[i][j]->z;
              SkinSurface->ControlPoints[i][j]->x =
    SkinSurface->ControlPoints[i][j2]->x;
              SkinSurface->ControlPoints[i][j]->y =
    SkinSurface->ControlPoints[i][j2]->y;
              SkinSurface->ControlPoints[i][j]->z =
    SkinSurface->ControlPoints[i][j2]->z;
              SkinSurface->ControlPoints[i][j2]->x = tx;
              SkinSurface->ControlPoints[i][j2]->y = ty;
              SkinSurface->ControlPoints[i][j2]->z = tz;
              }
```

```
        w  = SkinSurface->NknotsW;
        w2 = w/2;
        tz = SkinSurface->KnotSequenceW[w-1];
        for( j=0; j<w2; j++ )
            {
            j2 = w-j-1;
            tx = SkinSurface->KnotSequenceW[j];
            SkinSurface->KnotSequenceW[j] = tz -
    SkinSurface->KnotSequenceW[j2];
            SkinSurface->KnotSequenceW[j2] = tz - tx;
            }
        if ((w%2) == 1)
            SkinSurface->KnotSequenceW[w2] = tz -
    SkinSurface->KnotSequenceW[w2];

        C_mi_sfstobsf((short)SF_REPLC,SkinSurface,ptr);
        free_skincntl(SkinSurface);
        }
    free(SkinSurface);
    return 0;
}
#undef SF_STORE
#undef SF_REPLC


short C_sf_rnormbnd(ptr)
short ptr[];
{
    short  ret;
    struct EDGE_SURFACE *EdgeSurface;

    EdgeSurface = (struct EDGE_SURFACE *) malloc (sizeof(struct
EDGE_SURFACE));
    if (EdgeSurface == 0) return 200;
```

```
    ret = getbdrysf(ptr, EdgeSurface);

    if (ret == 0)
        {
        bsflip(&EdgeSurface->B_Spline[0]);
        bsflip(&EdgeSurface->B_Spline[1]);
        ret =
swap_bspl(&EdgeSurface->B_Spline[2],&EdgeSurface->B_Spline[3]);
        if (ret != 0) return ret;
        ret =  C_mi_sfstobnd ((short)SF_REPLC, EdgeSurface, ptr );
        freeEdgeSurf(EdgeSurface);
        }
    free(EdgeSurface);

    return ret;
}

#undef SF_STORE
#undef SF_REPLC



short C_sf_rnormrul(ptr)
short ptr[];
{
    struct RULEDSURFACE *RuledSurface;
    short  ret;

    RuledSurface = (struct RULEDSURFACE *) malloc (sizeof(struct
RULEDSURFACE));
    if (RuledSurface == 0) return 200;

    ret = getrulsf(ptr, RuledSurface);
    if (ret == 0)
        {
```

```
            bsflip(&RuledSurface->B_Spline1);
            bsflip(&RuledSurface->B_Spline2);
            ret = C_mi_sfstorul((short)1, RuledSurface, ptr);


            (void) free_CntlPnts(&RuledSurface->B_Spline1);
            (void) free_CntlPnts(&RuledSurface->B_Spline2);
            }
        free(RuledSurface);
        return ret;
    }


    short C_sf_rnormrot(ptr)
    short ptr[];
    {
        struct ROTATIONAL_SURFACE *rotsrf;
        short  ret;


        rotsrf = (struct ROTATIONAL_SURFACE *) malloc (sizeof(struct
    ROTATIONAL_SURFACE));
        if (rotsrf == 0) return 200;


        ret = ssr_GetRotational( ptr, rotsrf );
        if( ret == 0 )
            {
            bsflip(rotsrf->B_Spline);
            ret = C_mi_sfstorev((short)SF_REPLC,rotsrf,ptr);
            free_CntlPnts(rotsrf->B_Spline);
            }
        free(rotsrf);


        return ret;
        }
```

Four examples of shaded surfaces are presented in Figures **20, 21, 22** and **23**. Figure **20** shows a reverse surface normal of a top surface. Figure **21** shows a surface normal of a side surface. Figure **22** shows a reverse normal of a side surface, and Figure **23** shows a reverse normal of a front surface.

While the invention has been described in terms of a preferred embodiment in a specific system environment, those skilled in the art recognize that the invention can be practiced, wit modification, in other and different hardware and software environments within the spirit and scope of the appended claims.

**Claims**

1. Apparatus for performing a set of display operations to modify a three dimensional drawing on a graphic display, comprising:

   (a) means for storing information defining a three dimensional drawing on the graphic display;
   (b) means for generating a drawing on the graphic display based on the information;
   (c) means for selecting a surface of the drawing;
   (d) means for modifying the information and displaying the drawing with the selected surface appearing in the foreground of the display.

2. Apparatus as recited in claim 1, further comprising means for storing three dimensional drawing information for realistic shading of three dimensional surfaces on a graphic display.

3. Apparatus as recited in claim 1, further comprising predefined rules for modifying the information based on the type of surface.

4. Apparatus as recited in claim 1, further comprising means for modifying the illumination of individual pixels on the display.

5. Apparatus as recited in claim 1, further comprising means for specifying the location where the drawing should appear on the graphic display.

6. Apparatus as recited in claim 1, further comprising means for modifying the information based on knot sequences for individual splines of the drawing.

7. A method for performing a set of display operations to modify a three dimensional drawing on a graphic display, comprising the steps of:

   (a) storing information defining a three dimensional drawing on the graphic display;
   (b) generating a drawing on the graphic display based on the information;
   (c) selecting a surface of the drawing;
   (d) modifying the information and displaying the drawing with the selected surface appearing in the foreground of the display.

8. A method as recited in claim 7, further comprising the step of storing three dimensional drawing information in data structures.

9. A method as recited in claim 7, further comprising the step of predefining rules for modifying the information based on the type of surface.

10. A method as recited in claim 7, further comprising the step of modifying the illumination of individual pixels on the display.

11. A method as recited in claim 7, further comprising the step of specifying the location where the drawing should appear on the graphic display.

12. A method as recited in claim 7, further comprising the step of modifying the information based on knot sequences for individual splines of the drawing.

74

*FIG.1*

*FIG.7*

*FIG.8K*

LOAD A CADAM 2D DRAWING — 200

SELECT SOLID MENU ITEM — 210

SELECT ELEMENTS TO FORM PROFILE FROM — 220

SELECT FRONT & BACK CUTTING FACES — 230

CONVERT 2D GEOMETRY INTO 3D FACES — 240

CONVERT PFACE TABLE TO FACE TABLE — 250

GENERATE THE SOLID OBJECT — 260

DRAW THE SOLID OBJECT ON DISPLAY — 270

**FIG. 2**

LOAD A 2D DRAWING — 300

SELECT SOLID TAPER — 310

SELECT A PLANE REPRESENTING FRONT CUT FACE — 320

SELECT ELEMENTS FORMING PROFILE — 330

DEFINE BACK FACE — 340

DEFINE BACK FACE PROFILE — 350

CONVERT 2D GEOMETRIES TO 3D FACES — 360

CONVERT PFACE TABLE → FACE TABLE AND GENERATE SOLID — 370

DRAW THE SOLID — 380

**FIG. 3**

_Fig._4A

_Fig._4B

_Fig._4C

_Fig._4D

_Fig._4E

_Fig._4F

_Fig._4G

_Fig._4H

_Fig._4I

Fig. 5A

Fig. 5B

Fig. 5C

Fig. 5D

Fig. 5E

Fig. 5F

Fig. 5G

Fig. 5H

Fig. 5I

FIG. 6A

FIG. 6B

600

FIG. 6C

SELECT
FRONT FACE

FIG. 6D

610

SELECT PROFILE
ON FRONT FACE

FIG. 6E

FIG. 6F

620

FIG. 6G

SELECT
BACK FACE

FIG. 6H

630

SELECT PROFILE
ON BACK FACE

FIG. 6I

FIG. 6J

640

*Fig. 8A*

*Fig. 8B*

800

*Fig. 8C*

SELECT
FRONT FACE

*Fig. 8D*

810

SELECT PROFILE
ON FRONT FACE

*Fig. 8E*

*Fig. 8F*

820

*Fig. 8G*

SELECT
BACK FACE

*Fig. 8H*

830

SELECT PROFILE
ON BACK FACE

*Fig. 8I*

*Fig. 8J*

840

SOLID

View PV Scale=1.000  Wndw Size=0.718 , Ang=0.00,0.00,0.00

Select segment / YN erase

[Wndw Rot]

<2D Mode>

Seg #6, 1 selections on the segment

| | | | | | Point |
|---|---|---|---|---|---|
| | | | | | Line |
| | | | | | Crcle |
| | | | | | Spline |
| | | | | | Surf |
| | | | | | Solid |
| | | | | | Detl |
| | | | | | Note |
| | | | | | Dimen |
| | | | | | Modfy |
| | | | | | Group |
| | | | | | View |
| | | | | | Show |
| | | | | | Image |
| | | | | | Wndo |
| | | | | | Files |
| | | | | | P |
| | | | | | ? |
| | | | | | 2D/3D |
| | | | | | H |

*900*   *910*

| Add | Subtract | Use Old | + End | | Return |

**FIG. 9**

WINDOW

View PV Scale=1.000  Wndw Size=0.718 , Ang=16.39,-16.26,-17.82

Sel any / Ind center / Key X,Y,size / Key size / YN current axis

[Wndw Rot]

Indicate direction

| | | Point |
|---|---|---|
| | | Line |
| | | Crcle |
| | | Spline |
| | | Surf |
| | | Solid |
| | | Detl |
| | | Note |
| | | Dimen |
| | | Modfy |
| | | Group |
| | | View |
| | | Show |
| | | Image |
| | | Wndo |
| | | Files |
| | | P |
| | | ? |
| | | 2D/3D |
| | | H |

Y  X

*920*

| Move | Size | Box | Rotate | Window Set | Viewport | Content | Reset |

**FIG. 10**

| SOLID FUNCTION : PARAMETRIC MODIFICATION | |
|---|---|
| **PARAMETER FUNCTION MENU OPTIONS** | |
| Def Parent  Def Offset  Chg Parm  Show All  Noshow | |
| **MENU OPTIONS** | **FUNCTION** |
| Def Parent | DEFINES A PLANE OF THE SOLID AS A PARENT PLANE. MUST BE PAIRED WITH A PARALLEL OFFSET PLANE WHOSE DISTANCE BETWEEN THE TWO PLANES IS THE DISTANCE YOU WANT TO MODIFY. |
| Def Offset | DEFINES A PLANE OF THE SOLID PARALLEL TO THE PARENT PLANE AS AN OFFSET PLANE. MUST BE PAIRED WITH A PARALLEL DATUM PLANE FOR PARAMETRIC MODIFICATION. |
| Chg Parm | DISPLAYS THE DISTANCE VALUE BETWEEN PAIRS OF PARENT AND OFFSET PLANES. |
| Show All | DISPLAYS ALL NOSHOWN PLANES OF THE CURRENT SOLID. |
| Noshow | TEMPORARILY SUPPRESSES THE DISPLAY OF A SELECTED PLANE OF THE CURRENT SOLID SO THAT THE HIDDEN PLANE CAN BE SELECTED. |

1000

1100

1120

1130

1140

1150

FIG. 11

FIG. 12A

FIG. 12B

FIG. 12C

FIG. 13

*1300* SELECT A SOLID OBJECT FROM THE DISPLAY SCREEN TO MAKE IT AS AN ACTIVE ONE

*1310* USE "NO SHOW" FUNCTION TO REMOVE SOME FACES FROM THE SOLID OBJECT, SO THAT USER CAN SEE THE HIDDEN FACES

*1320* DEFINE PARENT FACE BY SELECTING A POLYGON OF THE SOLID

*1330* DEFINE OFFSET FACES BY SELECTING POLYGON THAT IS PARALLEL TO THE PARENT FACE

FIG. 14

*1410* SELECT A FACE OF THE SOLID OBJECT

*1420* VALIDATE THE SELECTED ELEMENT — INVALID / VALID

*1430* SET ATTRIBUTE OF THE SELECTED POLYGON TO "VISIBILITY OFF"

*FIG-15*

*FIG-24*

*FIG-16*

_1700_

SELECT A POLYGON

_1710_

GET FACE ID OF THE POLYGON

_1720_

ORDINARY FACE ← FIND FACE TYPE → OFFSET FACE

_1730_

HIGHLIGHT THE POLYGON

_1740_

FIND ITS PARENT FACE. FIND THE ASSOCIATED POLYGON

_1750_

HIGHLIGHT THE POLYGONS DISPLAY THEIR DISTANCE

_1760_

GET NEW VALUE FROM KEYBOARD INPUT

_1770_

CREATE FACE TABLE

_1780_

REGENERATE SOLID

FIG.17

_1800_

DISPLAY SHADED SURFACES

_1810_

SELECT A SURFACE

_1820_

ERASE THE SURFACE FROM DISPLAY

_1830_

REARRANGE SURFACE DATA

_1840_

DRAW THE SURFACE

FIG.18

_1900_

CALCULATE NUMBER OF KNOTS NECESSARY TO FLIP IN A GIVEN SPLINE

_1910_

NEW SEQUENCE VALUE OF EACH KNOT

_1920_

REPARAMETER THE START & END VALUE OF A TRIMMED SPLINE

_1930_

REVERSE THE SEQUENCE OF CTRL. PTS.

_1940_

REDISPLAY

FIG.19

FIG. 20

FIG. 21

FIG.22

FIG.23